# EUROPEAN PATENT APPLICATION

(11) **EP 4 845 123 A1**
(43) Date of publication of application: **25.11.2026**
(21) Application number: 25747757.0
(22) Date of filing: 23.01.2025
(51) Int. Cl.: H04L 61/2503

(54) **ADDRESS TRANSLATION METHOD, APPARATUS AND SYSTEM**

(30) Priority: 04.02.2024 CN 202410167042
(71) Applicant: Huawei Technologies Co., Ltd., Shenzhen, Guangdong 518129 (CN)
(72) Inventor: MA, Zhiyong, Shenzhen, Guangdong 518129 (CN)
(74) Representative: Huawei European IPR
(86) International application number: PCT/CN2025/074381
(87) International publication number: WO 2025/162188

(57) **Abstract**

This application provides an address translation method, apparatus, and system, relating to the field of network technologies. According to the solutions provided in this application, a source address of a first packet can be translated from a first private address into a target address based on the first packet of a first user being a packet of a target application, and the first packet can be sent to a first forwarding device. In addition, traceability information of the first user includes not only the target address corresponding to the first private address but also a first public address and a first port range that are corresponding to the first private address. In the traceability information of the first user, the first private address is corresponding to two different addresses. Therefore, when network address translation is performed on a packet of the first user, a source address of the packet can be translated from the first private address into different network addresses based on a type of an application to which the packet belongs, to effectively improve flexibility of address translation.

## Description

This application claims priority to Chinese Patent Application No. 202410167042.8, filed with the China National Intellectual Property Administration on February 4, 2024 and entitled "ADDRESS TRANSLATION METHOD, APPARATUS, AND SYSTEM", which is incorporated herein by reference in its entirety.

### TECHNICAL FIELD

This application relates to the field of network technologies, and in particular, to an address translation method, apparatus, and system.

### BACKGROUND

A broadband remote access server (broadband remote access server, BRAS) is an access gateway for broadband network applications. To implement application acceleration functions, a service awareness (service awareness, SA) service board may be added to the BRAS. The BRAS can divert user traffic to the SA service board for application identification, and divert the user traffic to a distributed network address translation (network address translation, NAT) service board for internet protocol (Internet protocol, IP) address translation. Then, the SA service board can forward traffic of identified specified applications to an acceleration router.

The acceleration router may perform centralized NAT processing on the received traffic, and forward the traffic to an acceleration access point, so that the acceleration access point sends the traffic to a destination device through a dedicated acceleration channel. In addition, the acceleration router may further advertise a NAT public network route to the acceleration channel, to ensure that return traffic sent by the target device can also be forwarded via the acceleration router.

However, the foregoing address translation mode has poor flexibility.

### SUMMARY

This application provides an address translation method, apparatus, and system, to resolve a technical problem that flexibility of an address translation mode in a related technology is poor.

According to a first aspect, an address translation method is provided. The method includes: translating a source address of a first packet from a first private address to a target address based on the received first packet of a first user being a packet of a target application, sending the first packet to a first forwarding device, and reporting traceability information of the first user to an authentication server, where the traceability information includes the target address corresponding to the first private address, and a first public address and a first port range that are corresponding to the first private address, and the target address is different from the first public address.

In the traceability information of the first user, the first private address is corresponding to two different addresses. Therefore, when network address translation is performed on a packet of the first user, a source address of the packet can be translated from the first private address into different network addresses based on a type of an application to which the packet belongs, to effectively improve flexibility of address translation.

Optionally, the first private address belongs to a first private address pool, and a process of translating the source address of the first packet from the first private address to the target address based on the received first packet of the first user being the packet of the target application may include: translating the source address of the first packet from the first private address into the target address in a second private address pool based on the received first packet of the first user being the packet of the target application. That is, the target address may be a private address. The second private address pool is different from the first private address pool.

In a scenario in which the target address is a private address, because the target address may represent only the first user, it can be ensured that the first forwarding device can perform network address translation on the first packet in a static mapping manner, and resources of a public address required for performing static mapping by the first forwarding device can be saved. In addition, when source tracing is performed on the first user, source tracing may be performed based on the traceability information stored in the authentication server and a static mapping algorithm in the first forwarding device. Because no system log (system log, syslog) server needs to be separately deployed for the first forwarding device, a system structure is effectively simplified, and system costs are reduced.

Optionally, the first public address belongs to a first public address pool, and a process of translating the source address of the first packet from the first private address to the target address based on the received first packet of the first user being the packet of the target application may include: translating the source address of the first packet from the first private address into the target address in a second public address pool based on the received first packet of the first user being the packet of the target application. That is, the target address may be a public address.

The second public address pool is different from the first public address pool.

In a scenario in which the target address is a public address, because the source address of the first packet is translated into a public address in an independent public address pool before the first packet is sent to the first forwarding device, the first forwarding device does not need to perform network address translation on the first packet. In addition, when source tracing is performed on the first user, source tracing may be directly performed based on the traceability information stored in the authentication server. In this solution, no syslog server needs to be separately deployed for the first forwarding device, to effectively simplify a system structure and reduce system costs.

Optionally, in a scenario in which the target address is a public address, the method may further include: translating a source port of the first packet into a port in a second port range. In other words, when network address translation is performed on the packet, of the target application, that is sent by the first user, both the source address and the source port may be translated.

Optionally, in a scenario in which the target address is a public address, the method further includes: advertising a route of the second public address pool to the first forwarding device, for the first forwarding device to advertise the route of the second public address pool.

After the source address of the packet of the target application is translated into the public address in the second public address pool, the first forwarding device does not need to perform network address translation on the packet of the target application. Therefore, to ensure that return traffic of the target application can be further forwarded by the first forwarding device, the first forwarding device needs to advertise the route of the second public address pool.

Optionally, a process of reporting the traceability information of the first user to the authentication server may include: reporting first information to the authentication server, and reporting second information to the authentication server. The first information includes the first public address and the first port range that are corresponding to the first private address, and the second information includes the target address corresponding to the first private address. That is, the target address and the first public address may be reported to the authentication server separately.

Both the first information and the second information may be remote authentication dial in user service (remote authentication dial in user service, RADIUS) information, and may also be referred to as a RADIUS interface message.

Optionally, a process of reporting the first information to the authentication server may include: after the first user goes online, reporting an accounting-start packet to the authentication server, where the accounting-start packet includes the first information; and a process of reporting the second information to the authentication server may include: reporting an accounting-update packet to the authentication server based on the received first packet being the packet of the target application, where the accounting-update packet includes the second information.

It may be understood that, after the first user goes online, the first private address and the corresponding first public address and first port range may be allocated to the first user, and reported to the authentication server via the accounting-start packet. After an initial packet, of the target application, that is sent by the first user is received, a target address may be re-allocated to the first user from the second private address pool or the second public address pool, and reported to the authentication server via the accounting-update packet.

Optionally, the method may further include: based on a received second packet of the first user not being the packet of the target application, translating a source address of the second packet from the first private address into the first public address, translating a source port of the second packet into a port in the first port range, and sending the second packet to a second forwarding device.

For a packet of a non-target application, network address translation may be performed based on a first public address and a first port range that are allocated when the first user goes online, and the packet is sent to the second forwarding device. The first forwarding device may be a forwarding device configured to forward traffic of the target application, and the second forwarding device may be a forwarding device configured to forward traffic of the non-target application. That is, the traffic of the target application and the traffic of the non-target application may be forwarded by different forwarding devices.

Optionally, the method may further include: based on a received third packet of a second user not being the packet of the target application, translating a source address of the third packet from a second private address into a second public address, translating a source port of the third packet into a port in a third port range, and sending the third packet to the second forwarding device. The first private address and the second private address belong to a same private address pool, and the first public address and the second public address belong to a same public address pool.

It may be understood that, after each user goes online, a private address may be allocated to the user from the first private address pool, and a corresponding public address and a corresponding port range may be allocated to the user from the first public address pool. For a packet, of the non-target application, that is sent by the user, network address translation may be performed by using the public address and the port range that are allocated when the user goes online.

Optionally, the method may further include: determining, by using an SA service board, that the first packet of the first user is the packet of the target application; or determining, by using an access control list (access control list, ACL), that the first packet of the first user is the packet of the target application. The SA service board may perform parsing by using a seven-layer protocol of a packet, to detect whether the received packet is a packet of the target application.

Optionally, the address translation method may be applied to a broadband remote access server, also referred to as a broadband network gateway (broadband network gateway, BNG).

Optionally, the target application may be an application on which an acceleration service is deployed. Correspondingly, the first forwarding device may be a forwarding device that can forward the packet to an acceleration path, for example, may be an acceleration router.

According to a second aspect, an address translation method is provided, applied to an authentication server. The method includes: receiving traceability information of a first user, where the traceability information includes a target address corresponding to a first private address of the first user, and a first public address and a first port range that are corresponding to the first private address. The target address is different from the first public address.

After receiving the traceability information of the first user, the authentication server may store the traceability information, that is, store a NAT log of the first user, to perform source tracing on the first user.

Optionally, a process of receiving the traceability information of the first user may include: receiving first information, where the first information includes the first public address and the first port range that are corresponding to the first private address; and receiving second information, where the second information includes the target address corresponding to the first private address.

Optionally, a process of receiving the first information may include: receiving an accounting-start packet, where the accounting-start packet includes the first information; and a process of receiving the second information may include: receiving an accounting-update packet, where the accounting-update packet includes the second information.

Optionally, the first private address belongs to a first private address pool, the target address belongs to a second private address pool, and the second private address pool is different from the first private address pool; or the first public address belongs to a first public address pool, the target address belongs to a second public address pool, and the second public address pool is different from the first public address pool. The second information may further include a second port range corresponding to the first private address.

According to a third aspect, an address translation method is provided, applied to an address translation system, where the system includes a broadband remote access server and a first forwarding device. The method includes: The broadband remote access server translates a source address of a first packet from a first private address into a target address based on the received first packet of a first user being a packet of a target application, and sends the first packet to the first forwarding device; the first forwarding device forwards the first packet; and the broadband remote access server reports traceability information of the first user to an authentication server, where the traceability information includes the target address corresponding to the first private address, and a first public address and a first port range that are corresponding to the first private address. The target address is different from the first public address.

Optionally, the first public address belongs to a first public address pool. A process in which the broadband remote access server translates the source address of the first packet from the first private address into the target address based on received first packet of the first user being the packet of the target application may include: The broadband remote access server translates the source address of the first packet from the first private address into a target address in a second public address pool based on received first packet of the first user being the packet of the target application, and translates a source port of the first packet into a port in a second port range, where the second public address pool is different from the first public address pool. The method may further include: The broadband remote access server advertises a route of the second public address pool to the first forwarding device; and the first forwarding device advertises the route of the second public address pool, where the source address of the first packet forwarded by the first forwarding device is the target address, that is, the first forwarding device does not perform network address translation on the first packet.

Optionally, the first private address belongs to a first private address pool. A process in which the broadband remote access server translates the source address of the first packet from the first private address into the target address based on received first packet of the first user being the packet of the target application may include: The broadband remote access server translates the source address of the first packet from the first private address into a target address in a second private address pool based on received first packet of the first user being the packet of the target application, where the second private address pool is different from the first private address pool. A process in which the first forwarding device forwards the first packet may include: The first forwarding device translates the target address of the first packet into a public address in a third public address pool, translates a source port of the first packet into a port in a fourth port range, and forwards the first packet.

Optionally, the method may further include: Based on a received second packet of the first user not being the packet of the target application, the broadband remote access server translates a source address of the second packet from the first private address into the first public address, translates a source port of the second packet into a port in the first port range, and sends the second packet to a second forwarding device; based on a received third packet of a second user not being the packet of the target application, the broadband remote access server translates a source address of the third packet from a second private address into a second public address, translates a source port of the third packet into a port in a third port range, and sends the third packet to the second forwarding device; and the second forwarding device forwards the second packet and the third packet, where the first private address and the second private address belong to a same private address pool, and the first public address and the second public address belong to a same public address pool.

Optionally, the first forwarding device may be an acceleration router, and is configured to accelerate forwarding of the packet of the target application.

According to a fourth aspect, an address translation method is provided. The method includes: sending a first packet to a first forwarding device based on the first packet sent by a first user being a packet of a target application, for the first forwarding device to perform network address translation on the first packet; and performing network address translation on a second packet based on the second packet sent by the first user not being the packet of the target application, and sending the second packet to a second forwarding device, where a source address of the first packet is a first private address, and a source address of the NAT-translated second packet is different from the first private address.

In this method, network address translation can be performed or not performed on a packet based on an application, to effectively improve flexibility of address translation. In addition, because network address translation is not performed on the first packet of the target application, the source address of the packet may represent only the first user. Therefore, it can be ensured that the first forwarding device can perform network address translation on the first packet in a static mapping manner. Correspondingly, when source tracing is performed on the first user, source tracing may be directly performed by using a static mapping algorithm in the first forwarding device, and no syslog server needs to be separately deployed, to effectively simplify a system structure and reduce system costs.

Optionally, the method may further include: after the first user goes online, allocating the first private address to the first user from a first private address pool; and after a second user goes online, allocating a second private address to the second user from a second private address pool, where the first user is a user who applies for an acceleration service of the target application, the second user is a user who does not apply for the acceleration service of the target application, and the first private address pool is different from the second private address pool.

According to the method provided in this application, an independent private address pool can be planned for users who apply for the acceleration service of the target application. Therefore, after packets of the users are directly sent to the first forwarding device, it can be ensured that source addresses of the packets received by the first forwarding device are continuously distributed. Correspondingly, a public address pool that is planned in the first forwarding device for network address translation needs to cover only the users who apply for the acceleration service of the target application, so that public address resources of the first forwarding device can be effectively saved.

Optionally, the method may further include: performing network address translation on a third packet sent by the second user, and sending the third packet to the second forwarding device. To be specific, for a user who does not apply for the acceleration service of the target application, whether a packet sent by the user is a packet of the target application may not need to be distinguished, but the packet may be directly forwarded after network address translation is performed on the packet.

According to a fifth aspect, an address translation method is provided, applied to a forwarding device. The method includes: performing first static mapping translation on a first packet, of a first user, that is sent by a broadband remote access server, and forwarding the first packet; and performing second static mapping translation on a second packet, of a second user, that is sent by the broadband remote access server, and forwarding the second packet, where the first static mapping translation includes: translating a source address of the first packet from a first internal network address into a first public address, and translating a source port of the first packet from a first internal network port into a first public network port in a first public network port range; the second static mapping translation includes: translating a source address of the second packet from the first internal network address into the first public address, and translating a source port of the second packet from a second internal network port into a second public network port in a second public network port range; and the first internal network port belongs to a first internal network port range, and the second internal network port belongs to a second internal network port range.

Due to a static mapping algorithm deployed in the forwarding device, network address translation can be performed based on an internal network address and an internal network port range. To be specific, for a same internal network address, if internal network port ranges are different, the internal network address and the internal network port ranges can be translated into a same public address and different public network port ranges. In this way, it can be ensured that a user can be uniquely determined based on the static mapping algorithm, to implement static source tracing for the user. Because no syslog server needs to be separately deployed, a system structure is effectively simplified, system costs are reduced, and space and power consumption for operating an equipment room can be prevented from being increased.

Optionally, the method further includes: determining, based on received traceability instructions for the first public address and the first public network port range by using a static mapping algorithm, the first internal network address and the first internal network port range that are corresponding to the first public address and the first public network port range; and determining, based on received traceability instructions for the first public address and the second public network port range by using the static mapping algorithm, the first internal network address and the second internal network port range that are corresponding to the first public address and the second public network port range.

Based on the foregoing analysis, it can be learned that, when the static mapping algorithm is used to perform source tracing on a public address and a public network port range, a corresponding internal network address and a corresponding internal network port range can be determined. Based on this, even if the internal network address represents multiple users, one user can be uniquely determined based on the internal network port range, to implement accurate source tracing for the user.

According to a sixth aspect, an address translation device is provided. The address translation device includes at least one module, and the at least one module may be configured to implement the address translation method according to any one of the foregoing aspects.

According to a seventh aspect, an address translation device is provided. The address translation device includes a memory, a processor, and a computer program that is stored in the memory and capable of being run on the processor. When executing the computer program, the processor implements the address translation method according to any one of the foregoing aspects.

According to an eighth aspect, an address translation device is provided. The address translation device may include a main control board and an interface board, and the main control board and the interface board may be configured to implement the address translation method according to any one of the foregoing aspects.

According to a ninth aspect, a computer-readable storage medium is provided. The computer-readable storage medium stores instructions, and the instructions are executed by a processor to implement the address translation method according to any one of the foregoing aspects.

According to a tenth aspect, a computer program product including instructions is provided. When the instructions are run on a processor, the processor is caused to perform the address translation method according to any one of the foregoing aspects.

According to an eleventh aspect, an address translation system is provided. The address translation system includes a broadband remote access server and a first forwarding device. The broadband remote access server is configured to implement the address translation method according to the first aspect or the fourth aspect. Alternatively, the first forwarding device is configured to implement the address translation method according to the fifth aspect.

Optionally, in a scenario in which the broadband remote access server is configured to implement the address translation method according to the first aspect, the address translation system may further include an authentication server, and the authentication server may be configured to implement the address translation method according to the second aspect. The authentication server may be an authentication, authorization, and accounting (authentication, authorization, and accounting, AAA) server.

According to a twelfth aspect, a chip is provided. The chip may be configured to implement the address translation method according to any one of the foregoing aspects.

In conclusion, this application provides the address translation method, apparatus, and system. According to the solutions provided in this application, the source address of the first packet can be translated from the first private address into the target address based on the first packet of the first user being the packet of the target application, and the first packet can be sent to the first forwarding device. In addition, the traceability information of the first user includes not only the target address corresponding to the first private address but also the first public address and the first port range that are corresponding to the first private address. In the traceability information of the first user, the first private address is corresponding to two different addresses. Therefore, when network address translation is performed on a packet of the first user, a source address of the packet can be translated from the first private address into different network addresses based on a type of an application to which the packet belongs, to effectively improve flexibility of address translation.

### BRIEF DESCRIPTION OF DRAWINGS

FIG. 1 is a diagram of a structure of a broadband remote access system according to an embodiment of this application;
FIG. 2 is a diagram of a structure of a NAT source tracing scenario according to an embodiment of this application;
FIG. 3 is a diagram of a static mapping algorithm according to an embodiment of this application;
FIG. 4 is a diagram of an application scenario of an address translation method according to an embodiment of this application;
FIG. 5 is a schematic flowchart of an address translation method according to an embodiment of this application;
FIG. 6 is a schematic flowchart of another address translation method according to an embodiment of this application;
FIG. 7 is a schematic flowchart of reporting an accounting packet to an authentication server according to an embodiment of this application;
FIG. 8 is a schematic flowchart of forwarding a packet by a broadband remote access server according to an embodiment of this application;
FIG. 9 is a schematic flowchart of still another address translation method according to an embodiment of this application;
FIG. 10 is another schematic flowchart of reporting an accounting packet to an authentication server according to an embodiment of this application;
FIG. 11 is a schematic flowchart of yet another address translation method according to an embodiment of this application;
FIG. 12 is a schematic flowchart of still yet another address translation method according to an embodiment of this application;
FIG. 13 is a schematic flowchart of a further address translation method according to an embodiment of this application;
FIG. 14 is a diagram of a structure of an address translation device according to an embodiment of this application;
FIG. 15 is a diagram of a structure of another address translation device according to an embodiment of this application;
FIG. 16 is a diagram of a structure of still another address translation device according to an embodiment of this application;
FIG. 17 is a diagram of a structure of yet another address translation device according to an embodiment of this application;
FIG. 18 is a diagram of a structure of still yet another address translation device according to an embodiment of this application; and
FIG. 19 is a diagram of a structure of a further address translation device according to an embodiment of this application.

### DESCRIPTION OF EMBODIMENTS

The following describes in detail an address translation method, apparatus, and system provided in embodiments of this application with reference to the accompanying drawings. First, technical terms in solutions provided in embodiments of this application are described.

Application acceleration: Application traffic is forwarded to an acceleration path (also referred to as a dedicated acceleration channel), so that latency and bandwidth for a client to access an application server are both guaranteed, thereby improving user experience.

Acceleration path: a forwarding path with low latency and guaranteed bandwidth.

Acceleration router: A router deployed at a front end of an acceleration path to direct traffic (that is, steer traffic) to the acceleration path.

Static source tracing: a NAT source tracing technology in which network address translation is performed using a static mapping from a private address to a public address, and is a source tracing mode that does not require NAT logs.

RADIUS source tracing: a NAT source tracing technology in which a user dynamically obtains a public IP address and a port range, which are delivered the public IP address and the port range to an AAA server via a RADIUS accounting packet, and traceability is performed through the AAA server, and is a source tracing mode that does not require NAT logs.

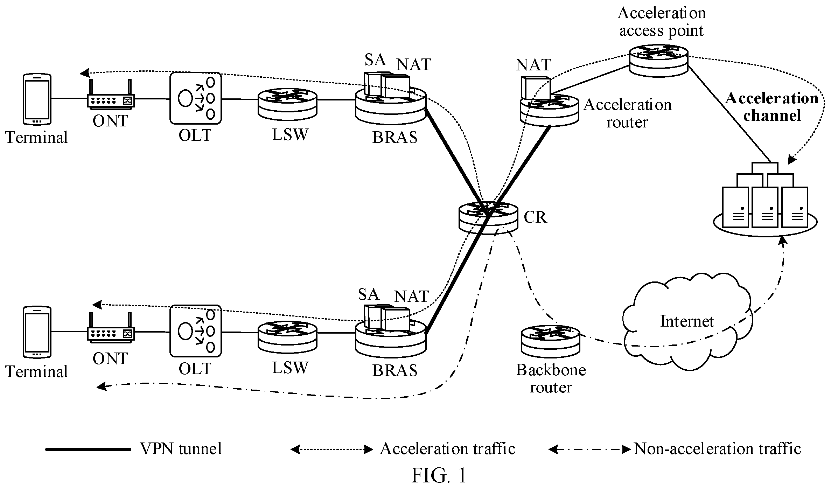

To implement an application acceleration function, as shown in FIG. 1, an SA service board may be added to a BRAS (also referred to as a BNG). The BRAS can divert traffic of a terminal user to the SA service board for application identification, and divert the traffic to a distributed NAT service board for network address translation (that is, NAT processing). Then, the SA service board can forward identified traffic of a specified application to an acceleration router. For example, the SA service board may divert the traffic of the specified application to an acceleration router through a virtual private network (virtual private network, VPN) tunnel or an SRv6 tunnel in a policy-based route redirection manner. SRv6 is a segment routing (segment routing, SR)-based internet protocol version 6 (Internet protocol version 6, IPv6) technology. It may be understood that, the BRAS (or the BNG) may be a physical BRAS, or may be a BRAS in which a control plane (control plane, CP) and a user plane (user plane, UP) are separated (also referred to as CU separation), and is also referred to as a virtual broadband remote access server (virtual broadband remote access server, vBRAS) system. SA service boards can be inserted into both types of BRASs. The SA service board in the vBRAS system can be inserted into a UP device.

The acceleration router may perform centralized NAT processing on received traffic (that is, a NAT device configured to perform NAT processing on the traffic may be attached to the acceleration router), and forward the traffic to an acceleration access point, so that the acceleration access point sends the traffic to a destination device through a dedicated acceleration channel. Optionally, the destination device may be an overseas server. In addition, to ensure that traffic returned from the destination device can also be returned to the acceleration router through the dedicated acceleration channel, the acceleration router (for example, the attached NAT device) further needs to advertise a public route to the dedicated acceleration channel. In this way, after receiving the traffic returned by the destination device, the acceleration access point may return the traffic from the dedicated acceleration channel to the acceleration router by searching a route, and the acceleration router returns the traffic to the BRAS.

For traffic of another application (namely, non-acceleration traffic), as shown in FIG. 1, the BRAS can divert the traffic to the distributed NAT service board for NAT processing. Then, the traffic can be forwarded to a backbone network router via a core router (core router, CR). The backbone network router may forward the traffic to the destination device through an internet (namely, a non-acceleration channel).

It can be learned from FIG. 1 that the traffic of the terminal user may be forwarded to the BRAS via network devices such as an optical network terminal (optical network terminal, ONT), an optical line terminal (optical line terminal, OLT), and a local area network switch (LAN switch, LSW). Both the acceleration router and the acceleration access point may be deployed in a data center (data center, DC) equipment room.

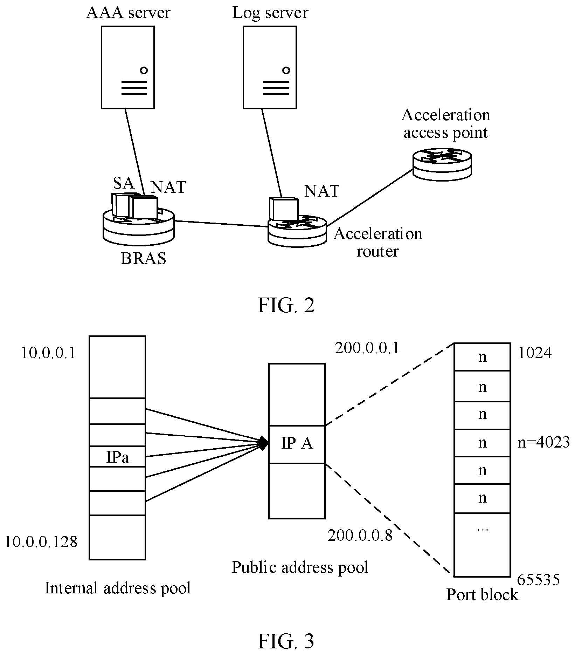

The NAT technology changes IP addresses used by users to access the internet. To facilitate network monitoring and internet access audit, NAT logs need to be saved for home broadband users who access the internet through NAT. A regulatory authority can determine user information by querying NAT logs based on IP addresses and ports of traffic for accessing a website. Before an application acceleration solution is deployed, the BRAS can use RADIUS tracing. To be specific, the BRAS can report private IP addresses, public IP addresses, and port range information of the users to an AAA server via a RADIUS accounting packet for storage, to implement NAT source tracing. After the application acceleration solution is deployed, a NAT device is added to the acceleration router. Because the acceleration router does not interact with the AAA server, the RADIUS source tracing cannot be used. Therefore, a syslog server needs to be configured for the acceleration router to meet NAT source tracing requirements, as shown in FIG. 2. However, adding the syslog server increases NAT source tracing costs, and space and power consumption for operating the equipment room of a carrier.

FIG. 3 is a schematic principle diagram of a static mapping algorithm according to an embodiment of this application. As shown in FIG. 3, based on the static mapping algorithm, one internal IP address in an internal address pool (inside pool) may be mapped to one port range and one public IP address in a public address pool (global pool). For example, the port range may include n=4023 ports. During NAT source tracing, an internal IP address in the internal address pool can be queried based on a port range and a public IP address in the public address pool. An AAA server can find a determined user based on the internal IP address. The internal address pool may be a private address pool, or may be a public address pool. Based on the principle of the static mapping algorithm, to ensure that a user can be accurately determined based on an internal IP address, one internal IP address representing only one user needs to be ensured.

Because the BRAS translates private IP addresses of multiple users into one public IP address using the NAT technology, for traffic received by the acceleration router, one public IP address represents multiple users. After a NAT device is added to the acceleration router, if the NAT device performs static source tracing by using the static mapping algorithm, because the static mapping algorithm requires that an internal IP address (for example, the public IP address translated by the BRAS) before translation represent only one user, all home broadband address segments need to be planned for the internal address pool. Accordingly, a public address pool planned on the acceleration router need to cover all home broadband users. However, after the application acceleration solution is deployed, not all users use the specified application that needs to be accelerated. For example, for a game application, only 10% of total home broadband users use the game application, and private addresses are not fixed. Correspondingly, actually, traffic of only 10% of the user needs to be diverted to the acceleration router. Consequently, most public addresses planned on the acceleration router are not used, causing wastes of public address resources.

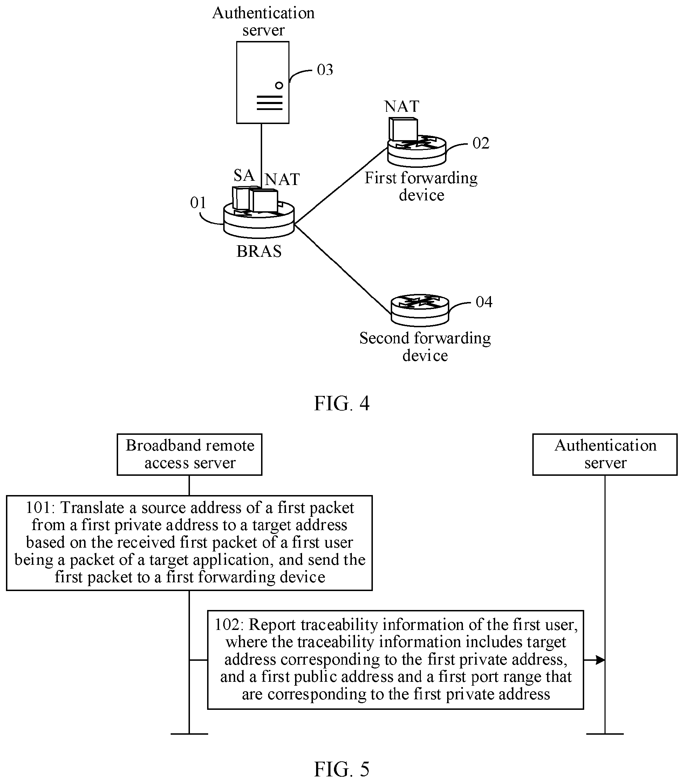

FIG. 4 is a diagram of a structure of an address translation system according to an embodiment of this application. As shown in FIG. 4, the system may include a BRAS 01 and a first forwarding device 02. The BRAS 01 is responsible for allocating a private IP address, a public IP address, and a port range (also referred to as a port segment) when a home broadband user goes online. As shown in FIG. 4, an SA service board and a NAT service board are further deployed on the BRAS 01. The SA service board may be configured to perform application identification on traffic received by the BRAS 01, to identify traffic of a target application. The NAT service board may perform network address translation, that is, perform NAT processing, on the traffic received by the BRAS 01. For the identified traffic of the target application, the BRAS 01 may redirect the traffic of the target application to the first forwarding device 02 through policy-based routing. For example, assuming that there is a VPN tunnel between the BRAS 01 and the first forwarding device 02, the BRAS 01 may redirect the acceleration traffic to the VPN tunnel through policy-based routing.

The first forwarding device 02 may be a forwarding device dedicated to forwarding traffic of the target application. For example, assuming that the target application is an application on which an acceleration service is deployed, the first forwarding device 02 may be an acceleration router, and can forward a packet through an acceleration forwarding channel. In addition, the first forwarding device 02 may advertise an IP address route of an independent public network pool to a destination device (for example, an overseas server) through the dedicated acceleration channel, to divert return traffic of the destination device.

Optionally, still refer to FIG. 4. The address translation system may further include an authentication server 03 and a second forwarding device 04. The authentication server 03 may be an AAA server, and is configured to: receive traceability information of a user reported by the BRAS 01, and store a NAT log, which is also referred to as a RADIUS log. The traceability information may include a private IP address, a public IP address, and a port range of the user.

The second forwarding device 04 may be a forwarding device configured to forward traffic of a non-target application. For example, the second forwarding device 04 may be a backbone network router, and can forward a packet through a public internet channel. For example, as shown in FIG. 1, the BRAS 01 may separately establish communication connections to the first forwarding device 02 and the second forwarding device 04 via a CR.

Optionally, the BRAS 01 or the BNG may be an intelligent (intelligence) device, that is, the BRAS may be an iBRAS, and the BNG may be an iBNG.

FIG. 5 is a flowchart of an address translation method according to an embodiment of this application. The method may be applied to an address forwarding device. Optionally, the address forwarding device may be the broadband remote access server (BRAS) in the system shown in FIG. 4. In addition, in the address translation method, NAT source tracing in an application acceleration scenario can be implemented without deploying a syslog server in a system, to effectively simplify a system structure and reduce system power consumption and costs. For example, the address forwarding device is a broadband remote access server. As shown in FIG. 5, the method includes the following steps.

Step 101: The broadband remote access server translates a source address of a first packet from a first private address into a target address based on the received first packet of a first user being a packet of a target application, and sends the first packet to a first forwarding device.

In this embodiment of this application, after receiving the first packet of the first user, the broadband remote access server may identify whether the first packet is the packet of the target application. If the first packet is the packet of the target application, the broadband remote access server can translate the source address of the first packet from the first private address into the target address, and sends, to the first forwarding device, the first packet obtained through address translation. That is, the broadband remote access server can perform network address translation on the first packet, and forward the first packet to the first forwarding device, so that the first forwarding device continues to forward the first packet.

The target application may be an application whose traffic needs to be forwarded by the first forwarding device. For example, the first forwarding device may be an acceleration router, and the target application may be an application on which an acceleration service is deployed, that is, the target application may be an acceleration application.

Step 102: The broadband remote access server reports traceability information of the first user to an authentication server, where the traceability information includes the target address corresponding to the first private address, and a first public address and a first port range that are corresponding to the first private address.

The target address is different from the first public address, that is, in the traceability information of the first user, the first private address is corresponding to two different IP addresses. In this embodiment of this application, the target address may be a private address, or may be a public address. The first public address and the first port range may be used by the broadband remote access server to perform network address translation on another packet (namely, a packet that does not belong to the target application) of the first user.

Optionally, the broadband remote access server may separately report first information and second information to the authentication server. The first information may include the first public address and the first port range that are corresponding to the first private address. The second information may include the target address corresponding to the first private address. For example, both the first message and the second message may be RADIUS messages.

In conclusion, this embodiment of this application provides the address translation method. According to the method, the source address of the first packet can be translated from the first private address into the target address based on the first packet of the first user being the packet of the target application, and the first packet can be sent to the first forwarding device. In addition, the traceability information of the first user includes not only the target address corresponding to the first private address but also the first public address and the first port range that are corresponding to the first private address. In the traceability information of the first user, the first private address is corresponding to two different addresses. Therefore, when network address translation is performed on a packet of the first user, a source address of the packet can be translated from the first private address into different network addresses based on a type of an application to which the packet belongs, to effectively improve flexibility of address translation.

In a scenario in which the target address is a private address, the target address may represent only the first user. Therefore, it can be ensured that the first forwarding device can perform network address translation on the first packet in a static mapping manner. In addition, when source tracing is performed on the first user, source tracing may be performed based on the traceability information stored in the authentication server and a static mapping algorithm in the first forwarding device. In a scenario in which the target address is a public address, because the broadband remote access server has translated the source address of the first packet into a public address in an independent public address pool, the first forwarding device does not need to perform network address translation on the first packet. In addition, when source tracing is performed on the first user, source tracing may be directly performed based on the traceability information stored in the authentication server. No syslog server needs to be deployed in the foregoing two scenarios, to effectively simplify a system structure and reduce system costs, and prevent space and power consumption for operating an equipment room from being increased.

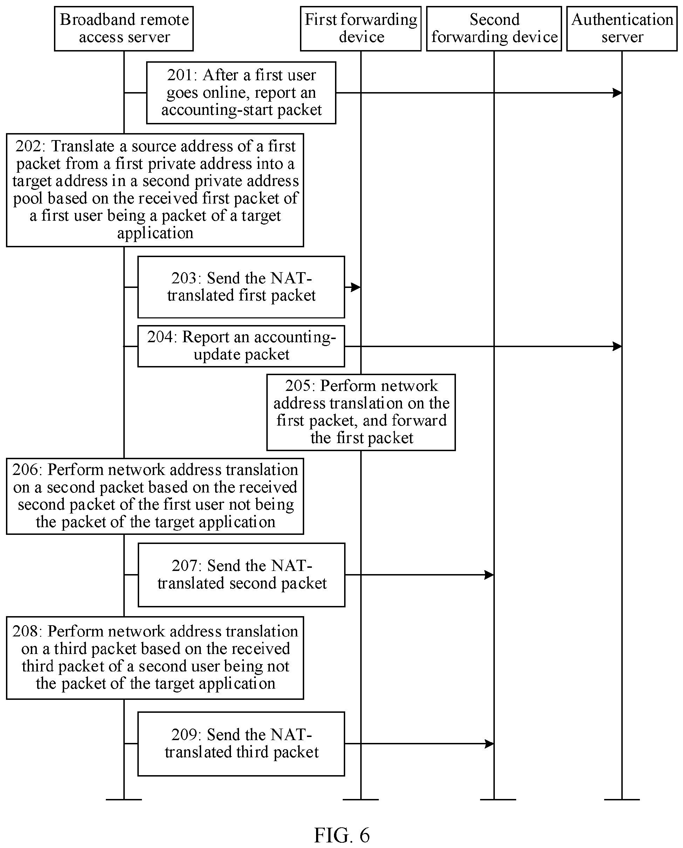

The following describes the address translation method provided in embodiments of this application by using an example in which the target address is a private address. As shown in FIG. 6, the method includes the following steps.

Step 201: After a first user goes online, a broadband remote access server reports an accounting-start packet to an authentication server.

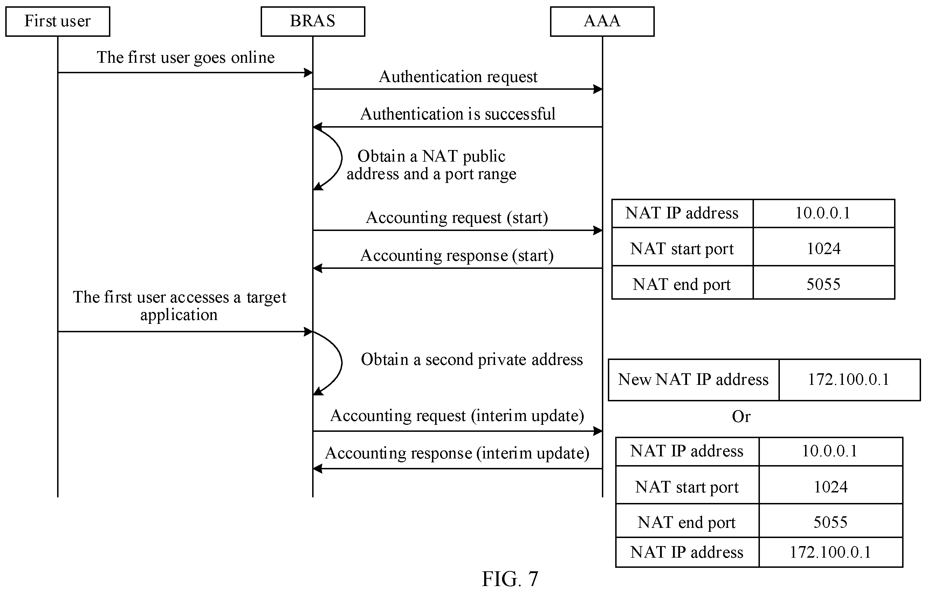

Refer to FIG. 7. After detecting that the first user goes online, the broadband remote access server may first authenticate the first user by using the authentication server (for example, an AAA server). After determining that the authentication of the first user is successful, the broadband remote access server may allocate a first private address to the first user from a pre-configured first private address pool, and may allocate, to the first user, a corresponding first port range and a first public address from a pre-configured first public address pool. Then, the broadband remote access server may report the accounting-start packet to the authentication server, where the accounting-start packet includes the first public address and the first port range that are corresponding to the first private address. It may be understood that the accounting-start packet may further include the first private address.

It may be further understood that the first private address pool may be a general private address pool, and the first public address pool may be a public address pool used to perform network address translation on traffic of a non-target application, that is, a public address pool for non-acceleration traffic.

For example, it is assumed that the first private address pool configured in the broadband remote access server is 172.0.0.0/15, and the first public address pool is 10.0.0.0/19. After the first user goes online, the broadband remote access server may allocate a first private address 172.0.0.1 to the first user from the first private address pool, and allocate, to the first user, a first port range of 1024 to 5055 and a first public address 10.0.0.1 from the first public address pool.

In addition, as shown in FIG. 7, the broadband remote access server may report an accounting request (accounting request) packet to the authentication server, where the accounting request packet belongs to a start (start) type, and therefore may also be referred to as an accounting-start packet. The accounting-start packet includes the following type length value (type length value, TLV) fields: a NAT IP address (NAT-IP-Address) field, a NAT start port (NAT-Start-Port) field, and a NAT end port (NAT-End-Port) field. The NAT IP address field carries the first public address 10.0.0.1, the NAT start port field carries a start port 1024 of the first port range, and the NAT end port field carries an end port 5055 of the first port range.

Step 202: The broadband remote access server translates a source address of a first packet from the first private address into a target address in a second private address pool based on the received first packet of the first user being a packet of a target application.

After receiving the first packet of the first user, the broadband remote access server may first detect whether the first packet is the packet of the target application. The target application may be an application whose traffic needs to be forwarded by the first forwarding device, for example, may be an application on which an acceleration service is deployed. If determining that the first packet is the packet of the target application, the broadband remote access server may translate the source address of the first packet from the first private address into the target address in the second private address pool, that is, the target address is a private address. The second private address pool may be a private address pool that is configured in the broadband remote access server and that is dedicated to performing network address translation on traffic (for example, acceleration traffic) of the target application. It can be learned that the second private address pool is different from the first private address pool. For example, the second private address pool may be 172.100.0.0/18.

In this embodiment of this application, when performing network address translation on the first packet, the broadband remote access server may translate only the source address of the first packet, and does not need to translate a source port of the first packet. That is, the broadband remote access server may perform NAT processing on the first packet in a no port address translation (no port address translation, no-PAT) manner.

In a possible example, as shown in FIG. 4, an SA service board is deployed in the broadband remote access server, and the broadband remote access server may determine, by using the SA service board, that the first packet of the first user is the packet of the target application.

In another possible example, no SA service board needs to be deployed in the broadband remote access server, and the broadband remote access server may determine, by using an ACL, that the first packet of the first user is the packet of the target application.

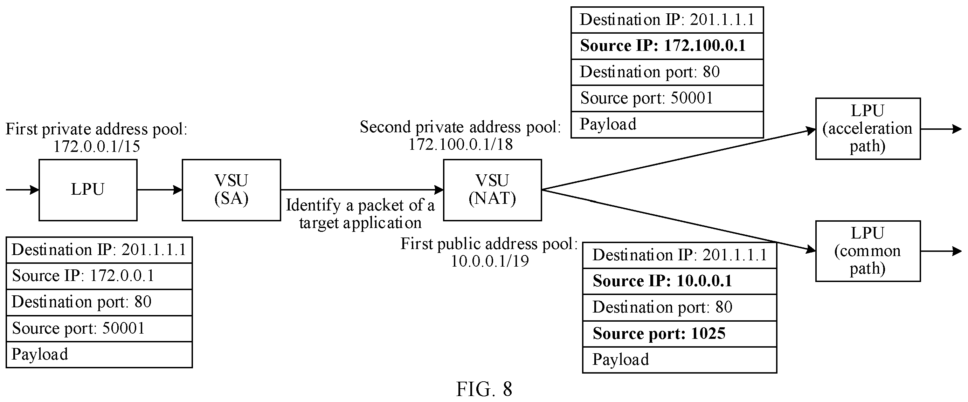

For example, refer to FIG. 8. Multiple line processing units (line processing units, LPUs) and multiple versatile service units (versatile service units, VSUs) may be deployed in the broadband remote access server. The LPU is also referred to as an interface board, and the VSU may be used as an SA service board or a NAT service board. It is assumed that a destination address of a first packet received by the LPU is 201.1.1.1, a source address is 172.0.0.1, a destination port is 80, and a source port is 50001. An SA service board identifies the first packet (for example, identifies the first packet through layer 7 parsing), and after determining that the first packet is a packet of the target application, may add a mark to the first packet, where the mark indicates that the first packet is the packet of the target application. For example, the SA may encapsulate a packet header into an outer layer of the first packet, and add the mark to the packet header. Then, the SA service board may divert the first packet to a NAT service board. The NAT service board may translate, based on the mark in the first packet, the source address 172.0.0.1 of the first packet into the target address 172.100.0.1 in the second private address pool 172.100.0.0/18. It can be learned from FIG. 8 that, after the NAT service board performs NAT processing on the first packet, the source port of the first packet remains unchanged.

Step 203: The broadband remote access server sends, to the first forwarding device, the NAT-translated first packet.

After completing network address translation on the first packet, the broadband remote access server may send, to the first forwarding device, the NAT-translated first packet. For example, refer to FIG. 8. The NAT service board in the broadband remote access server may forward, to the LPU, the NAT-translated first packet, and the LPU may forward the first packet to the first forwarding device, for example, forward the first packet to an acceleration router, so that the acceleration router can forward the first packet through an acceleration path.

It may be understood that, before sending the first packet to the first forwarding device, the LPU may further remove the packet header encapsulated by the SA service board into the outer layer of the first packet, to avoid affecting normal forwarding of the first packet.

Step 204: The broadband remote access server reports an accounting-update packet to the authentication server based on the received first packet being the packet of the target application.

After determining that the first packet is the packet of the target application, the broadband remote access server can translate the source address of the first packet into the target address and forward the first packet. Therefore, to facilitate source tracing for the first user, the broadband remote access server further needs to report the accounting-update packet to the authentication server. The accounting-update packet includes the target address corresponding to the first private address.

For example, as shown in FIG. 7, the broadband remote access server may report an accounting request packet to the authentication server, and the accounting request packet belongs to an interim update (interim update) type, and therefore may also be referred to as an accounting-update packet.

Optionally, the accounting-update packet may include a new TLV field: a new NAT IP address (NAT-Ext-IP-Address) field, and the new NAT IP address field may carry the target address 172.100.0.1.

Alternatively, the accounting-update packet may reuse an existing field to update and report the target address, the first public address, and the first port range. For example, refer to FIG. 7. The accounting-update packet may include two NAT IP address fields, and the two NAT IP address fields respectively carry the first public address 10.0.0.1 and the target address 172.100.0.1. In addition, the accounting-update packet further includes the NAT start port field and the NAT end port field, to carry the first port range.

It may be understood that the broadband remote access server may report the accounting-update packet of the first user to the authentication server after receiving an initial packet, of the target application, that is sent by the first user.

It may be further understood that the foregoing accounting-start packet and accounting-update packet may also be collectively referred to as a RADIUS message, a RADIUS interface message, or a RADIUS packet. After receiving the RADIUS message, the authentication server may save NAT log information of the first user.

Step 205: The first forwarding device performs network address translation on the first packet, and forwards the first packet.

In this embodiment of this application, the first forwarding device may perform network address translation on the received first packet in a NAT static mapping manner, and forward the NAT-translated first packet. For example, refer to FIG. 1. Assuming that the first forwarding device is an acceleration router, the acceleration router may forward the first packet to the acceleration access point, so that the acceleration access point sends the first packet to the destination device through the acceleration channel.

It may be understood that, in a NAT static mapping algorithm configured in the first forwarding device, an internal network IP segment is the second private address pool (for example, 172.100.0.0/18), and a public network IP segment may be a third public address pool, for example, 20.0.0.0/24.

It may be further understood that the NAT static mapping mode used by the first forwarding device may be a PAT mode, that is, both the source address and the source port are translated during network address translation. For example, the first forwarding device may translate the source address of the first packet from the first private address into a public address in the third public address pool, and translate the source port of the first packet into a port in a fourth port range.

In this embodiment of this application, to ensure that return traffic of the destination device can also be forwarded by the first forwarding device, the first forwarding device further needs to advertise a route of the third public address pool (for example, 20.0.0.0/24). For example, the first forwarding device may advertise a user network route (user network route, UNR) of the third public address pool to the acceleration access point, and the acceleration access point advertises the UNR route to the acceleration channel.

Step 206: The broadband remote access server performs network address translation on a second packet based on the received second packet of the first user not being the packet of the target application.

If receiving the second packet of the first user, the broadband remote access server may also first detect whether the second packet is the packet of the target application, for example, detect whether the second packet belongs to acceleration traffic. For the detection manner, refer to the related descriptions of step 202. Details are not described herein. If determining that the second packet is not the packet of the target application, the broadband remote access server may perform network address translation on the second packet. The network address translation may include: translating a source address of the second packet from the first private address into the first public address, and translating a source port of the second packet into a port in the first port range. That is, the broadband remote access server may perform NAT processing on the second packet in the PAT mode.

For example, still refer to FIG. 8. It is assumed that a destination address of a second packet received by the LPU is 201.1.1.1, a source address is 172.0.0.1, a destination port is 80, and a source port is 50001. After identifying the second packet, if determining that the second packet is not the packet of the target application, the SA service board may directly divert the second packet to the NAT service board. The NAT service board may translate the source address of the second packet from the first private address 172.0.0.1 into the first public address 10.0.0.1, and translate the source port of the second packet from 50001 into a port 1025 in the first port range.

Step 207: The broadband remote access server sends, to a second forwarding device, the NAT-translated second packet.

After completing network address translation on the second packet, the broadband remote access server may send, to the second forwarding device, the NAT-translated second packet. The second forwarding device may be a device configured to forward traffic of a non-target application. For example, the second forwarding device may be a backbone network router configured to forward common traffic (namely, non-acceleration traffic).

For example, refer to FIG. 8. The NAT service board in the broadband remote access server may forward, to the LPU, the second packet obtained through NAT processing, and the LPU may forward the second packet to the backbone network router, so that the backbone network router can forward the second packet through a common path (for example, an internet).

Optionally, as shown in FIG. 8, a packet (for example, the first packet) of the target application and a packet (for example, the second packet) of the non-target application may be forwarded by different LPUs in the broadband remote access server, or may be forwarded by a same LPU. This is not limited in this embodiment of this application.

Step 208: The broadband remote access server performs network address translation on a third packet based on the received third packet of a second user not being the packet of the target application.

If receiving the third packet of the second user, the broadband remote access server may also first detect whether the third packet is a packet of the target application, for example, detect whether the third packet belongs to acceleration traffic. For the detection manner, refer to the related descriptions of step 202. Details are not described herein. If determining that the third packet is not the packet of the target application, the broadband remote access server may perform network address translation on the third packet. The network address translation may include: translating a source address of the third packet from a second private address into a second public address, and translating a source port of the third packet into a port in a third port range.

The second private address may be allocated by the broadband remote access server to the second user from the first private address pool after the second user goes online. The second public address and the third port range may be allocated by the broadband remote access server to the second user from the first public address pool after the second user goes online.

Step 209: The broadband remote access server sends, to the second forwarding device, the NAT-translated third packet.

After completing network address translation on the third packet, the broadband remote access server may send, to the second forwarding device, the NAT-translated third packet. For an implementation process of step 209, refer to the related descriptions of step 207. Details are not described.

It can be learned from the foregoing step 201 to step 209 that, after the user goes online, the broadband remote access server may first allocate a private address to a user from the first private address pool, and allocate, to the user, a port range and a public address from the first public address pool. For common traffic of the user, the broadband remote access server may perform NAT processing in the PAT mode on the common traffic based on the allocated public address and port range, and forward the common traffic to the second forwarding device. For traffic of the target application, the broadband remote access server may perform NAT processing in the no-PAT mode on the traffic of the target application by using the second private address pool, and forward the traffic to the first forwarding device.

Optionally, for a packet, of the target application, that is sent by any user, the broadband remote access server may perform network address translation on the packet by using the method shown in step 202, that is, perform network address translation on the packet by using the second private address pool. Alternatively, the broadband remote access server may perform, by using the method shown in step 202, network address translation on only a packet, of the target application, that is sent by a target user. The target user may be a user who applies for a service (for example, the acceleration service) of the target application. For a packet, of the target application, that is sent by another user, and a packet, of the non-target application, that is sent by the target user, network address translation may be performed by using the method shown in step 206 or step 208.

It may be understood that a sequence of the steps of the address translation method provided in this embodiment of this application may be properly adjusted, or addition or deletion may be correspondingly performed on the steps based on a situation. For example, step 204 may be performed before step 203; or step 206 and step 207 may be deleted based on a situation; or step 208 and step 209 may be deleted based on a situation.

In conclusion, according to the address translation method provided in this embodiment of this application, the source address of the first packet can be translated from the first private address into the target address in the second private address pool based on the first packet of the first user being the packet of the target application, and the first packet can be sent to the first forwarding device. In addition, the traceability information of the first user includes not only the target address corresponding to the first private address but also the first public address and the first port range that are corresponding to the first private address. The target address may represent only the first user. Therefore, it can be ensured that the first forwarding device can perform network address translation on the first packet in a static mapping manner. Correspondingly, when source tracing is performed on the first user, source tracing may be performed based on the traceability information stored in the authentication server and a static mapping algorithm in the first forwarding device. Because no syslog server needs to be deployed, a system structure is effectively simplified, system costs are reduced, and space and power consumption for operating an equipment room can be prevented from being increased.

In addition, because source addresses of packets of the target application can be translated into an independent second private address pool, it can be ensured that the source addresses of the packets, of the target application, that are received by the first forwarding device are continuously distributed. Therefore, resources of public addresses required for static mapping on the first forwarding device can be saved, and wastes of public address resources can be avoided.

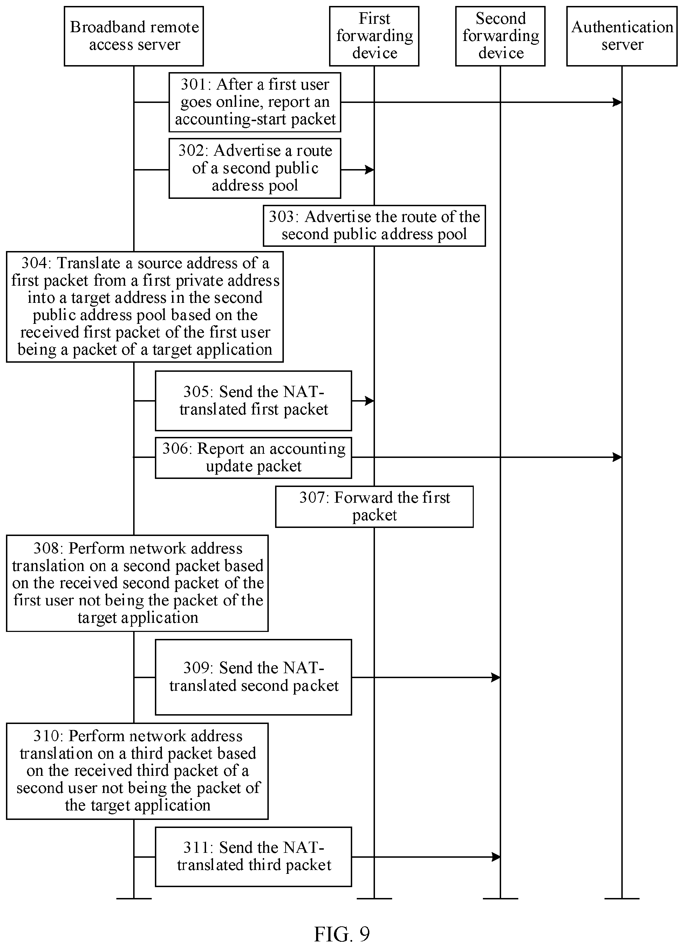

The following describes the address translation method provided in embodiments of this application by using an example in which the target address is a public address. As shown in FIG. 9, the method includes the following steps.

Step 301: After a first user goes online, a broadband remote access server reports an accounting-start packet to an authentication server.

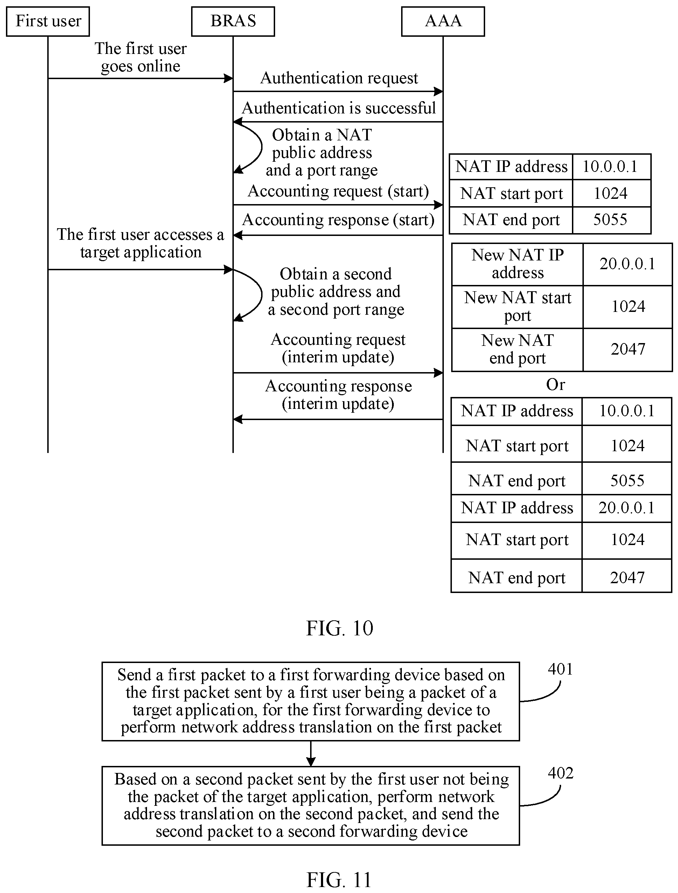

Refer to FIG. 10. After detecting that the first user goes online, the broadband remote access server may first authenticate the first user by using the authentication server (for example, an AAA server). After determining that the authentication of the first user is successful, the broadband remote access server may allocate a first private address to the first user from a pre-configured first private address pool, and may allocate, to the first user, a corresponding first port range and a first public address from a pre-configured first public address pool. Then, the broadband remote access server may report the accounting-start packet to the authentication server, where the accounting-start packet includes the first public address and the first port range that are corresponding to the first private address. It may be understood that the accounting-start packet may further include the first private address.

It may be further understood that the first private address pool may be a general private address pool, and the first public address pool may be an address pool used to perform network address translation on traffic of a non-target application, that is, a public address pool for non-acceleration traffic.

For example, it is assumed that the first private address pool configured in the broadband remote access server is 172.0.0.0/15, and the first public address pool is 10.0.0.0/19. After the first user goes online, the broadband remote access server may allocate a first private address 172.0.0.1, a corresponding first public address 10.0.0.1, and a corresponding first port range of 1024 to 5055 to the first user. As shown in FIG. 10, in the accounting-start packet reported by the broadband remote access server to the authentication server, a NAT IP address field carries the first public address 10.0.0.1, a NAT start port field carries a start port 1024 of the first port range, and a NAT end port field carries an end port 5055 of the first port range.

Step 302: The broadband remote access server advertises a route of a second public address pool to a first forwarding device.

In this embodiment of this application, the broadband remote access server is further configured with the second public address pool, and the second public address pool may be a public address pool dedicated to performing network address translation on traffic (for example, acceleration traffic) of a target application. It can be learned that the second public address pool is different from the first public address pool. For example, the second public address pool may be 20.0.0.0/24.

It may be understood that after performing network address translation on the traffic of the target application by using the second public address pool, the broadband remote access server forwards the traffic to the first forwarding device, and the first forwarding device does not need to perform network address translation on the received traffic of the target application, that is, does not need to perform NAT processing. Therefore, the broadband remote access server further needs to advertise the route of the second public address pool to the first forwarding device, so that the first forwarding device advertises the route of the second public address pool.

Step 303: The first forwarding device advertises the route of the second public address pool.

After receiving the route, of the second public address pool, that is advertised by the broadband remote access server, the first forwarding device may continue to advertise the route of the second public address pool, so that return traffic of the target application can also be forwarded by the first forwarding device.

For example, assuming that a VPN tunnel is established between the broadband remote access server and the first forwarding device, the broadband remote access server may import the route (namely, a NAT public route) of the second public address pool into the VPN tunnel. The first forwarding device may import the VPN route into a public network in a cross manner, and advertise the VPN route to a destination device (for example, an overseas server).

Step 304: The broadband remote access server translates a source address of a first packet from the first private address into a target address in the second public address pool based on the received first packet of the first user being a packet of the target application.

After receiving the first packet of the first user, the broadband remote access server may first detect whether the first packet is the packet of the target application, for example, detect whether the first packet belongs to acceleration traffic. If determining that the first packet is the packet of the target application, the source address of the first packet may be translated from the first private address into the target address in the second public address pool.

Optionally, the broadband remote access server may further translate a source port of the first packet into a port in a second port range. That is, the broadband remote access server may perform NAT processing on the first packet in a PAT mode.

In a possible example, as shown in FIG. 4, an SA service board is deployed in the broadband remote access server, and the broadband remote access server may determine, by using the SA service board, that the first packet of the first user is the packet of the target application.

In another possible example, no SA service board needs to be deployed in the broadband remote access server, and the broadband remote access server may determine, by using an ACL, that the first packet of the first user is the packet of the target application.

Step 305: The broadband remote access server sends, to the first forwarding device, the NAT-translated first packet.

After completing network address translation on the first packet, the broadband remote access server may send, to the first forwarding device, the NAT-translated first packet. For an implementation process of step 305, refer to the related descriptions of step 203. Details are not described again.

Step 306: The broadband remote access server reports an accounting-update packet to the authentication server based on the received first packet being the packet of the target application.

After determining that the first packet is the packet of the target application, the broadband remote access server can translate the source address of the first packet into the target address in the second public address pool and forward the first packet. Therefore, to facilitate source tracing for the first user, the broadband remote access server further needs to report the accounting-update packet to the authentication server. The accounting-update packet includes the target address corresponding to the first private address. In addition, if the broadband remote access server further translates the source port of the first packet based on the second port range, the accounting-update packet may further include the second port range.

For example, as shown in FIG. 10, the accounting-update packet reported by the broadband remote access server to the authentication server may include new TLV fields: a new NAT IP address (Nat-Ext-IP-Address) field, a new NAT start port (Nat-Ext-Start-Port) field, and a new NAT end port (Nat-Ext-End-Port) field. The new NAT IP address field may carry a target address 20.0.0.1, the new NAT start port field may carry a start port 1024 of the second port range, and the new NAT end port field may carry an end port 2047 of the second port range.

Alternatively, the accounting-update packet may reuse an existing field to update and report the target address, the second port range, the first public address, and the first port range. For example, refer to FIG. 10. The accounting-update packet may include two NAT IP address fields, and the two NAT IP address fields respectively carry the first public address 10.0.0.1 and the target address 20.0.0.1. In addition, the accounting-update packet further includes two NAT start port fields and two NAT end port field, to respectively carry the first port range and the second port range.

It may be understood that the broadband remote access server may report the accounting-update packet of the first user to the authentication server after receiving an initial packet, of the target application, that is sent by the first user.

It may be further understood that the foregoing accounting-start packet and accounting-update packet may also be collectively referred to as a RADIUS message, a RADIUS interface message, or a RADIUS packet. After receiving the RADIUS message, the authentication server may save NAT log information of the first user.

Step 307: The first forwarding device forwards the first packet.

After receiving the first packet, the first forwarding device may directly forward the first packet, for example, may forward the first packet to an acceleration access point. In addition, the first forwarding device does not need to perform network address translation on the first packet. Correspondingly, the source address of the first packet forwarded by the first forwarding device is still the target address.

Step 308: The broadband remote access server performs network address translation on a second packet based on the received second packet of the first user not being the packet of the target application.

If receiving the second packet of the first user, the broadband remote access server may also first detect whether the second packet is the packet of the target application, for example, detect whether the second packet belongs to acceleration traffic. For the detection manner, refer to the related descriptions of step 202 and step 304. Details are not described herein again. If determining that the second packet is not the packet of the target application, the broadband remote access server may perform network address translation on the second packet. The network address translation may include: translating a source address of the second packet from the first private address into the first public address, and translating a source port of the second packet into a port in the first port range. That is, the broadband remote access server may perform NAT processing on the second packet in the PAT mode.

Step 309: The broadband remote access server sends, to a second forwarding device, the NAT-translated second packet.

The second forwarding device may be a device configured to forward a packet of a non-target application. For example, the second forwarding device may be a backbone network router configured to forward common traffic (namely, non-acceleration traffic).

Step 310: The broadband remote access server performs network address translation on a third packet based on the received third packet of a second user not being the packet of the target application.

If receiving the third packet of the second user, the broadband remote access server may also first detect whether the third packet is a packet of the target application, for example, detect whether the third packet belongs to acceleration traffic. For the detection manner, refer to the related descriptions of step 202 and step 304. Details are not described herein again. If determining that the third packet is not the packet of the target application, the broadband remote access server may perform network address translation on the third packet. The network address translation may include: translating a source address of the third packet from a second private address into a second public address, and translating a source port of the third packet into a port in a third port range.

The second private address may be allocated by the broadband remote access server to the second user from the first private address pool after the second user goes online. The second public address and the third port range may be allocated by the broadband remote access server to the second user from the first public address pool after the second user goes online.

Step 311: The broadband remote access server sends, to the second forwarding device, the NAT-translated third packet.

After completing NAT processing on the third packet, the broadband remote access server may send, to the second forwarding device, the third packet obtained through NAT processing. For an implementation process of step 308 to step 311, refer to the related descriptions of step 206 to step 209. Details are not described herein again.

It can be learned from the foregoing step 301 to step 311 that, after the user goes online, the broadband remote access server may first allocate a private address to a user from the first private address pool, and allocate, to the user, a port range and a public address from the first public address pool. For common traffic of the user, the broadband remote access server may perform NAT processing in the PAT mode on the common traffic based on the allocated public address and port range, and forward the common traffic to the second forwarding device. For traffic of the target application, the broadband remote access server may re-allocate a public address and a port range from the second public address pool, perform NAT processing in the PAT mode on the traffic of the target application by using the re-allocated public address and port range, and forward the traffic to the first forwarding device.

It can be further learned from step 301 to step 311 that, in a scenario in which the target address is the target address in the second public address pool, because the first forwarding device does not need to perform network address translation on the received packet of the target application, no NAT device needs to be deployed on the first forwarding device.

Optionally, for a packet, of the target application, that is sent by any user, the broadband remote access server may perform network address translation on the packet by using the method shown in step 304, that is, perform network address translation on the packet by using the second public address pool. Alternatively, the broadband remote access server may perform, by using the method shown in step 304, network address translation on only a packet, of the target application, that is sent by a target user. The target user may be a user who applies for a service (for example, an acceleration service) of the target application. For a packet, of the target application, that is sent by another user, and a packet, of the non-target application, that is sent by the target user, network address translation may be performed by using the method shown in step 308 or step 310.

It may be understood that a sequence of the steps of the address translation method provided in this embodiment of this application may be properly adjusted, or addition or deletion may be correspondingly performed on the steps based on a situation. For example, step 302 may be performed before step 301; or step 306 may be performed before step 305; or step 308 and step 309 may be deleted based on a situation; or step 310 and step 311 may be deleted based on a situation.

In conclusion, in the address translation method provided in this embodiment of this application, the broadband remote access server can translate the source address of the first packet from the first private address into the target address in the second public address pool based on the first packet of the first user being the packet of the target application, and send the first packet to the first forwarding device. In addition, the traceability information of the first user includes not only the target address corresponding to the first private address but also the first public address and the first port range that are corresponding to the first private address. Because the broadband remote access server has translated the source address of the first packet into the public address, the first forwarding device does not need to perform network address translation on the first packet. In addition, when source tracing is performed on the first user, source tracing may be directly performed based on the traceability information stored in the authentication server. No syslog server needs to be deployed in the foregoing scenario, to effectively simplify a system structure and reduce system costs, and prevent space and power consumption for operating an equipment room from being increased.

Table 1 shows a difference between the method embodiments shown in FIG. 6 and FIG. 9. It can be learned from Table 1 that, in a scenario in which the target address is a private address in the second private address pool, NAT processing needs to be performed twice on traffic of the target application, and when source tracing is performed on user information, static source tracing and RADIUS source tracing need to be combined for source tracing. In a scenario in which the target address is a public address in the second public address pool, the broadband remote access server needs to perform NAT processing only once on traffic of the target application, and when source tracing is performed on user information, only a RADIUS source tracing mode needs to be used for source tracing.

**Table 1**

| Technical feature | Embodiment in FIG. 6 (the target address is the private address) | Embodiment in FIG. 9 (the target address is the public address) |
|---|---|---|
| Private address pool selected for a user to go online | The BRAS is configured with a general first private address pool, and selects an IP address from this address pool for the user to go online. | Same as the embodiment in FIG. 6. |
| NAT public address of traffic of a target application | The first forwarding device is configured with a third public address pool, to implement a NAT function for the traffic of the target application, and advertises a route of the third public address pool. | The BRAS is configured with a second public address pool, to implement a NAT function for the traffic of the target application; and sends a route of the second public address pool to the VPN, and then the first forwarding device advertises the route to a public network in a cross manner. |
| NAT mode of the traffic of the target application | The BRAS performs NAT processing in a no-PAT mode, and translates an IP address of only the traffic of the target application. | The BRAS performs NAT processing in a PAT mode, and dynamically translates an IP address and a port. |
| | The first forwarding device statically translates the IP address and a port in a PAT mode. | The first forwarding device does not perform NAT processing. |
| | NAT processing needs to be performed twice. | NAT processing needs to be performed only once. |
| RADIUS message | Add a TLV to a real-time accounting packet, in which one part is added: a new NAT IP address; or reuse an original TLV. | Add a TLV to a real-time accounting packet, in which three parts are added: a new NAT IP address, a new NAT start port, and a new NAT end port; or reuse an original TLV. |
| Source tracing mode | Static source tracing+RADIUS source tracing | Only RADIUS source tracing |

FIG. 11 is a flowchart of yet another address translation method according to an embodiment of this application. The method may be applied to an address forwarding device. Optionally, the address forwarding device may be the broadband remote access server (BRAS) in the system shown in FIG. 4. For example, the address forwarding device is a broadband remote access server. As shown in FIG. 11, the method includes the following steps.

Step 401: Send a first packet to a first forwarding device based on the first packet sent by a first user being a packet of a target application, for the first forwarding device to perform network address translation on the first packet.

In this embodiment of this application, after receiving the first packet of the first user, the broadband remote access server may identify whether the first packet is the packet of the target application. If the first packet is the packet of the target application, the broadband remote access server can directly send the first packet to the first forwarding device. That is, the broadband remote access server does not need to perform network address translation on the first packet, that is, does not need to perform NAT processing on the first packet.

A source address of the first packet is a first private address. The first forwarding device can perform network address translation on the received first packet. The target application may be an application whose traffic needs to be forwarded by the first forwarding device. For example, the first forwarding device may be an acceleration router, and the target application may be an application on which an acceleration service is deployed, that is, the target application may be an acceleration application.

Optionally, the first user may be a user who applies for a service (for example, the acceleration service) of the target application, and the first user may also be referred to as a subscriber.

Step 402: Based on a second packet sent by the first user not being the packet of the target application, perform network address translation on the second packet, and send the second packet to a second forwarding device.

If determining that the second packet sent by the first user is not the packet of the target application, the broadband remote access server may first perform network address translation (that is, NAT processing) on the second packet, and send the second packet to the second forwarding device. A source address of the second packet is also the first private address. For example, the broadband remote access server may translate the source address of the second packet from the first private address into a first public address, and translate a source port of the second packet into a port in a first public network port range.

In conclusion, this embodiment of this application provides the address translation method. According to the method, the first packet of the target application can be directly sent to the first forwarding device, that is, network address translation is not performed on the first packet of the target application. In addition, according to the method, network address translation can be performed on the second packet that is not of the target application, and the second packet can be sent to the second forwarding device. According to the method provided in this embodiment of this application, network address translation can be performed or not performed on a packet based on an application, to effectively improve flexibility of address translation.

In addition, because network address translation is not performed on the first packet of the target application, the source address of the first packet may represent only the first user. Therefore, it can be ensured that the first forwarding device can perform network address translation on the first packet in a static mapping manner. Correspondingly, when source tracing is performed on the first user, source tracing may be directly performed by using a static mapping algorithm in the first forwarding device, and no syslog server needs to be separately deployed. Therefore, a system structure is effectively simplified, system costs are reduced, and space and power consumption for operating an equipment room can be prevented from being increased.

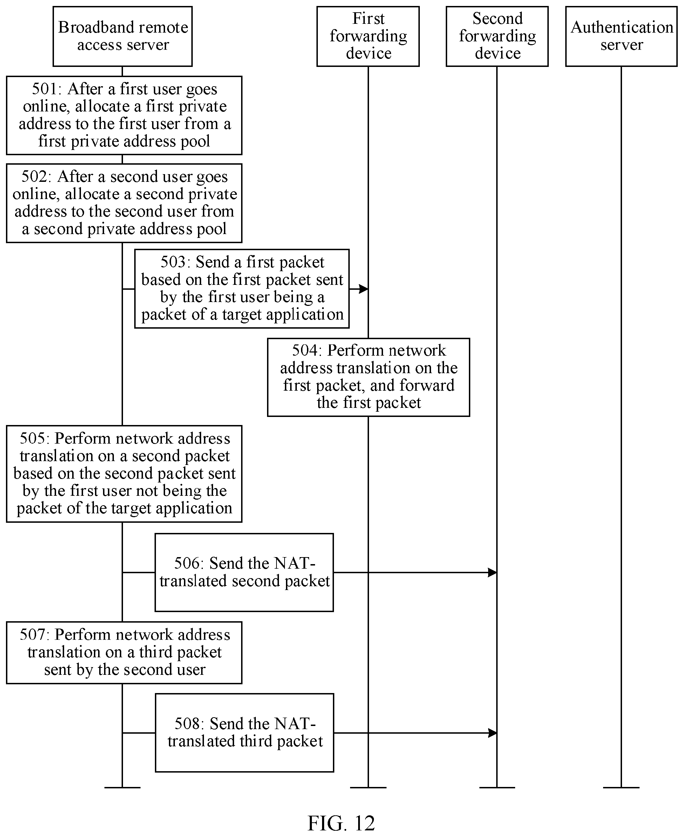

FIG. 12 is a flowchart of still yet another address translation method according to an embodiment of this application. The method may be applied to the system shown in FIG. 4. As shown in FIG. 12, the method includes the following steps.

Step 501: After a first user goes online, a broadband remote access server allocates a first private address to the first user from a first private address pool.

In this embodiment of this application, the first private address pool is configured in the broadband remote access server, and the first private address pool may be an address pool dedicated to allocating a private address to a target user. The target user may be a user who applies for a service of a target application. After the first user goes online, if determining that the first user is the target user, the broadband remote access server may allocate the first private address to the first user from the first private address pool.

It may be understood that the target application may be an application whose traffic needs to be forwarded by a first forwarding device. For example, the first forwarding device may be an acceleration router, and the target application may be an application on which an acceleration service is deployed, that is, the target application may be an acceleration application. Correspondingly, the target user may be a user who applies for (or subscribes to) the acceleration service of the target application, and the target user may also be referred to as a subscriber.

It may be further understood that a first public address pool may be further configured in the broadband remote access server, and the first public address pool may be used to perform address translation on traffic of a non-target application. After the first user goes online, the broadband remote access server may further allocate, to the first user, a first public address and a first port range from the first public address pool. In addition, the broadband remote access server may further report traceability information (for example, may be reported via an accounting-start packet) of the first user to an authentication server, where the traceability information includes the first private address, and the first public address and the first port range that are corresponding to the first private address.

For example, assuming that the first private address pool is 172.100.0.0/18, and the first public address pool is 10.0.0.0/19, the first private address allocated by the broadband remote access server to the first user may be 172.100.0.1, the first public address may be 10.0.0.1, and the first port range may be 1024 to 5055.

Step 502: After a second user goes online, the broadband remote access server allocates a second private address to the second user from a second private address pool.

The second private address pool is further configured in the broadband remote access server, and the second private address pool is different from the first private address pool. In addition, the second private address pool may be an address pool used to allocate a private address to a common user, that is, the second private address pool may be a general private address pool. The common user may be a user who does not apply for a service (for example, the acceleration service) of the target application, and the common user may also be referred to as a non-subscriber. After the second user goes online, if determining that the second user is the common user, the broadband remote access server may allocate the second private address to the second user from the second private address pool.

It may be understood that, after the second user goes online, the broadband remote access server may further allocate, to the second user, a second port range and a second public address from the first public address pool. In addition, the broadband remote access server may further report traceability information (for example, may be reported via an accounting-start packet) of the second user to the authentication server, where the traceability information includes the second private address, and the second public address and the second port range that are corresponding to the second private address. The second public address is different from the first public address, and the second port range may be the same as or different from the first port range. This is not limited in this embodiment of this application.

For example, assuming that the second private address pool is 172.0.0.0/15, and the first public address pool is 10.0.0.0/19, the second private address allocated by the broadband remote access server to the second user may be 172.0.0.1, the second public address may be 10.0.0.2, and the second port range may be 1024 to 5055.

Step 503: The broadband remote access server sends a first packet to the first forwarding device based on the first packet sent by the first user being a packet of the target application.

After receiving the first packet sent by the first user, the broadband remote access server may detect whether the first packet is the packet of the target application. For example, whether the first packet belongs to acceleration traffic is detected. If it is determined that the first packet is the packet of the target application, the first packet may be directly sent to the first forwarding device, and network address translation does not need to be performed on the first packet. It may be understood that a source address of the first packet, of the first user, that is received by the broadband remote access server is the first private address, and the source address of the first packet sent by the broadband remote access server to the first forwarding device is also the first private address.

In a possible example, as shown in FIG. 4, an SA service board is deployed in the broadband remote access server, and the broadband remote access server may determine, by using the SA service board, that the first packet of the first user is the packet of the target application.

In another possible example, no SA service board needs to be deployed in the broadband remote access server, and the broadband remote access server may determine, by using an ACL, that the first packet of the first user is the packet of the target application.

Step 504: The first forwarding device performs network address translation on the first packet, and forwards the first packet.

In this embodiment of this application, the first forwarding device may perform network address translation on the received first packet in a NAT static mapping manner, and forward the NAT-translated first packet. For example, refer to FIG. 1. Assuming that the first forwarding device is an acceleration router, the acceleration router may forward the first packet to the acceleration access point, so that the acceleration access point sends the first packet to the destination device through the acceleration channel.

It may be understood that, in a NAT static mapping algorithm configured in the first forwarding device, an internal network IP segment is the first private address pool (for example, 172.100.0.0/18), and a public network IP segment may be a second public address pool, for example, 20.0.0.0/24.

It may be further understood that the NAT static mapping mode used by the first forwarding device may be a PAT mode, that is, both the source address and the source port are translated during network address translation. For example, the first forwarding device may translate the source address of the first packet from the first private address into a public address in the second public address pool, and translate the source port of the first packet into a port in a third port range.

In this embodiment of this application, to ensure that return traffic of the destination device can also be forwarded by the first forwarding device, the first forwarding device further needs to advertise a route of the second public address pool (for example, 20.0.0.0/24). For example, the first forwarding device may advertise a UNR route of the second public address pool to the acceleration access point, and the acceleration access point advertises the UNR route to the acceleration channel.

Step 505: The broadband remote access server performs network address translation on a second packet based on the second packet sent by the first user not being the packet of the target application.

If receiving the second packet of the first user, the broadband remote access server may also first detect whether the second packet is the packet of the target application, for example, detect whether the second packet belongs to acceleration traffic. For the detection manner, refer to the related descriptions of step 503. Details are not described herein. If determining that the second packet is not the packet of the target application, the broadband remote access server may perform network address translation on the second packet.

The network address translation may include: translating a source address of the second packet from the first private address into the first public address, and translating a source port of the second packet into a port in the first port range. That is, the broadband remote access server may perform NAT processing on the second packet in the PAT mode.

Step 506: The broadband remote access server sends, to a second forwarding device, the NAT-translated second packet.

The second forwarding device may be a device configured to forward a packet of a non-target application. For example, the second forwarding device may be a backbone network router configured to forward common traffic (namely, non-acceleration traffic).

Step 507: The broadband remote access server performs network address translation on a third packet sent by the second user.

If the broadband remote access server receives the third packet of the second user, because the second user does not apply for the service of the target application, the broadband remote access server may not need to determine whether the third packet is a packet of the target application, but may directly perform network address translation on the third packet. The network address translation may include: translating a source address of the third packet from the second private address into the second public address, and translating a source port of the third packet into a port in the second port range.

Step 508: The broadband remote access server sends, to the second forwarding device, the NAT-translated third packet.

After completing network address translation on the third packet, the broadband remote access server may send, to the second forwarding device, the NAT-translated third packet.

It can be learned from step 501 to step 508 that, in the solution provided in this embodiment of this application, a private address of the target user may be fixed in an independent private address pool (namely, the first private address pool). For the traffic (for example, the acceleration traffic) of the target application of the target user, the broadband remote access server does not perform NAT processing, but directly redirects the traffic to the first forwarding device (for example, redirects the traffic to the VPN), and the first forwarding device performs NAT processing. For a common user, whether a packet sent by the common user is a packet of the target application does not need to be distinguished, and NAT processing can be performed on all packets in the PAT mode by using the first public address pool.

It may be understood that a sequence of the steps of the address translation method provided in this embodiment of this application may be properly adjusted, or addition or deletion may be correspondingly performed on the steps based on a situation. For example, step 502 may be performed before step 501; or step 505 may be performed before step 503; or step 507 and step 508 may be deleted based on a situation.

In conclusion, this embodiment of this application provides the address translation method. According to the method, the first packet of the target application can be directly sent to the first forwarding device, that is, network address translation is not performed on the first packet of the target application. In addition, according to the method, network address translation can be performed on the second packet that is not of the target application, and the second packet can be sent to the second forwarding device. Because network address translation is not performed on the first packet of the target application, the source address of the packet may represent only the first user. Therefore, it can be ensured that the first forwarding device can perform network address translation on the first packet in a static mapping manner. Correspondingly, when source tracing is performed on the first user, source tracing may be directly performed by using a static mapping algorithm in the first forwarding device, and no syslog server needs to be separately deployed. Therefore, a system structure is effectively simplified, system costs are reduced, and space and power consumption for operating an equipment room can be prevented from being increased.

In addition, according to the method provided in this embodiment of this application, an independent first private address pool can be planned for users who apply for the service of the target application. Therefore, after packets of the users are directly sent to the first forwarding device, it can be ensured that source addresses of the packets received by the first forwarding device are continuously distributed. Correspondingly, a public address pool that is planned in the first forwarding device for network address translation needs to cover only the users who apply for the acceleration service of the target application, so that public address resources of the first forwarding device can be effectively saved.

Table 2 shows a difference between the embodiments shown in FIG. 12 and FIG. 6. It can be learned from Table 2 that, for the embodiment shown in FIG. 6, NAT processing needs to be performed twice on traffic of the target application, and when source tracing is performed on user information, static source tracing and RADIUS source tracing need to be combined for source tracing. For the embodiment shown in FIG. 12, the first forwarding device needs to perform NAT processing on traffic of the target application only once, and when source tracing is performed on user information, static source tracing and RADIUS source tracing need to be combined for source tracing. Based on static source tracing, an internal IP address (for example, a translated target address or the first private address of the first user) can be determined, and the user information can be finally determined through RADIUS source tracing.

In addition, in the embodiment shown in FIG. 6, the broadband remote access server can translate the source address of the packet of the target application into an address in the dedicated second private address pool. In the embodiment shown in FIG. 12, the broadband remote access server can directly fix, in the independent first private address pool, the private address of the user who applies for the service of the target application. Both the two manners can ensure that source addresses of traffic, of the target application, that is received by the first forwarding device are continuously distributed, to effectively save NAT public address resources planned on the first forwarding device, and avoid wasting public address resources.

**Table 2**

| Technical features | Embodiment in FIG. 6 | Embodiment in FIG. 12 |
|---|---|---|
| Private address pool selected for a user to go online | The BRAS is configured with one private address pool, and selects an IP address from this address pool for the user to go online. | The BRAS is configured with two private address pools; and identifies a target user when the user goes online, where the target user uses an independent private address pool. |
| NAT public address of traffic of a target application | The first forwarding device is configured with a third public address pool, to implement a NAT function of the traffic of the target application, and advertises a route of the third public address pool. | It is the same as the embodiment in FIG. 6. |
| NAT mode of the traffic of the target application | The BRAS performs NAT processing in a no-PAT mode, and translates an IP address of only the traffic of the target application. | The BRAS device does not perform NAT processing. |
| | | The first forwarding device statically translates an IP address and a port in a PAT mode. |
| | The first forwarding device statically translates the IP address and a port in a PAT mode. | |
| | NAT processing needs to be performed twice. | NAT processing needs to be performed only once. |
| RADIUS message | A TLV is added to a real-time accounting packet: Add one new NAT IP address, or reuse an original TLV. | No TLV is added to a real-time accounting packet. |
| Source tracing mode | Static source tracing+RADIUS source tracing | It is the same as the embodiment in FIG. 6. |

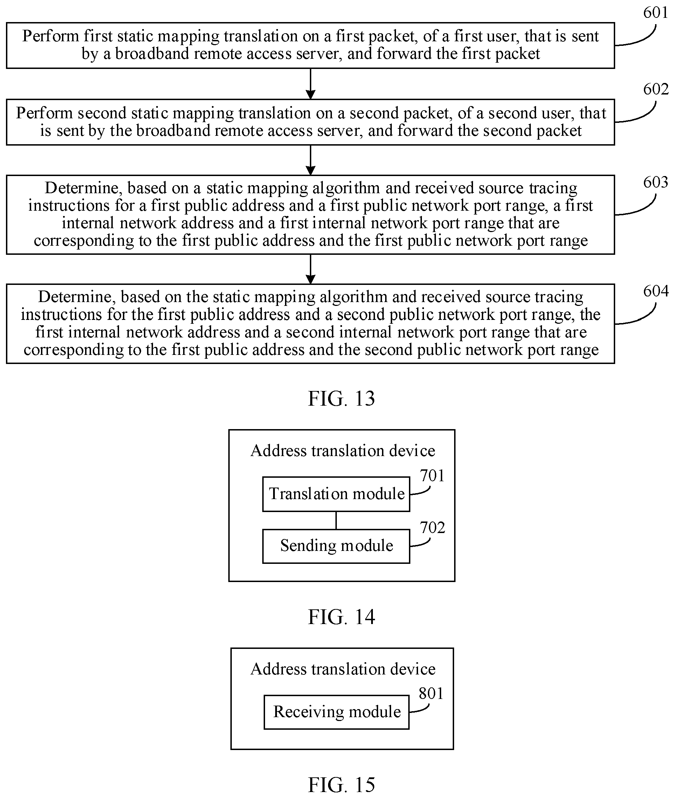

FIG. 13 is a flowchart of a further address translation method according to an embodiment of this application. The method may be applied to a forwarding device. For example, the method may be applied to the first forwarding device in the system shown in FIG. 4. As shown in FIG. 13, the method includes the following steps.

Step 601: Perform first static mapping translation on a first packet, of a first user, that is sent by a broadband remote access server, and forward the first packet.

In this embodiment of this application, the forwarding device may be a forwarding device configured to forward traffic of a target application. For example, assuming that the target application is an application on which an acceleration service is deployed, the forwarding device may be an acceleration router. Correspondingly, all packets that are sent by the broadband remote access server and received by the forwarding device may be packets of the target application.

A static mapping algorithm may be deployed in the forwarding device, and the forwarding device may perform static mapping translation on a received packet based on the static mapping algorithm. In addition, based on the static mapping algorithm, an internal IP address in an internal IP address segment and a corresponding internal port range may be mapped to a public IP address in a public IP address segment and a public port range. That is, based on the static mapping algorithm, a same internal IP address and different internal port ranges may be mapped to a same public IP address and different public port ranges. The internal IP address segment may be a first public address pool that is deployed in the broadband remote access server and used to perform network address translation on traffic of a target user, for example, may be a carrier-grade network address translation (carrier-grade NAT, CGN) address pool. The target user may be a user who applies for a service (for example, the acceleration service) of the target application, and the target user may also be referred to as a subscriber.

For the first packet, of the first user, that is sent by the broadband remote access server, the forwarding device may perform first static mapping translation on the first packet, and forward the first packet, for example, may forward the first packet to an acceleration access point. The first static mapping translation may include: translating a source address of the first packet from a first internal network address into a first public address, and translating a source port of the first packet from a first internal network port into a first public network port in a first public network port range.

The first internal network address may belong to the first public address pool, and the first internal network port may belong to a first internal network port range. After the first user goes online, the broadband remote access server may allocate a first private address to the first user, and may allocate, to the first user, a port range (namely, the first internal network port range) and a public address (namely, the first internal network address) from the first public address pool based on the first user being a target user. After receiving the first packet sent by the first user, the broadband remote access server may translate the source address of the first packet from the first private address into the first internal network address, translate the source port of the first packet into the first internal network port, and send the first packet to the forwarding device.

Step 602: Perform second static mapping translation on a second packet, of a second user, that is sent by the broadband remote access server, and forward the second packet.

The second static mapping translation includes: translating a source address of the second packet from the first internal network address into the first public address, and translating a source port of the second packet from a second internal network port into a second public network port in a second public network port range, where the second internal network port belongs to a second internal network port range.

It may be understood that after the second user goes online, the broadband remote access server may allocate a second private address to the second user, and may allocate, to the second user, a port range (namely, the second internal network port range) and a public address (namely, the first internal network address) from the first public address pool based on the second user being a target user. After receiving the second packet sent by the second user, the broadband remote access server may translate the source address of the second packet from the second private address into the first internal network address, translate the source port of the second packet into the second internal network port, and send the second packet to the forwarding device.

With reference to the foregoing step 601, it can be learned that, for different target users, the broadband remote access server may allocate different private addresses, and may allocate a public address and port ranges from the first public address pool. If public addresses of two target users are the same, because port ranges are different, one public address and one port range may indicate one target user. Based on the static mapping algorithm deployed in the forwarding device, network address translation can be performed based on an internal address and a port range. Therefore, it can be ensured that a target user can be uniquely determined based on the static mapping algorithm, to implement static source tracing for the target user.

It may be further understood that, a second public address pool may be further configured in the broadband remote access server, and the second public address pool may be used to allocate a public address and a port range to a non-target user. In addition, after performing network address translation on a packet of the non-target user, the broadband remote access server may forward the packet to a second forwarding device. It can be learned that, after a user goes online, the broadband remote access server may allocate a public address and a port range to the user from different public address pools based on a type of the user (namely, a target user or a non-target user). After a packet of the user is received, network address translation may be directly performed on the packet based on the allocated public address and the allocated port range, and whether the packet is the packet of the target application does not need to be detected. Correspondingly, an SA service board may not need to be deployed in the broadband remote access server.

Refer to FIG. 13. The method may include the following steps.

Step 603: Determine, based on the static mapping algorithm and received source tracing instructions for the first public address and the first public network port range, the first internal network address and the first internal network port range that are corresponding to the first public address and the first public network port range.

In this embodiment of this application, if receiving the source tracing instructions for the first public address and the first public port range, the forwarding device may determine, based on the static mapping algorithm, the first internal network address and the first internal network port range that are corresponding to the first public address and the first public port range. Because the first internal network address and the first internal network port range may represent the first user, accurate source tracing for the first user can be implemented.

Step 604: Determine, based on the static mapping algorithm and received source tracing instructions for the first public address and the second public network port range, the first internal network address and the second internal network port range that are corresponding to the first public address and the second public network port range.

If receiving the source tracing instructions for the first public address and the second public port range, the forwarding device may determine, based on the static mapping algorithm, the first internal network address and the second internal network port range that are corresponding to the first public address and the second public port range. Because the first internal network address and the second internal network port range may represent the second user, accurate source tracing for the second user can be implemented.

Based on the foregoing analysis, it can be learned that, when the static mapping algorithm is used to perform source tracing on a public address and a public network port range, a corresponding internal network address and a corresponding internal network port range can be determined. Based on this, even if the internal network address represents multiple users, one user can be uniquely determined based on the internal network port range, to implement accurate source tracing for the user.

In conclusion, this embodiment of this application provides the address translation method, so that the forwarding device can perform network address translation on a received packet based on the static mapping algorithm. Due to the static mapping algorithm, network address translation can be performed based on an internal network address and an internal network port range. To be specific, for a same internal network address, if internal network port ranges are different, the internal network address and the internal network port ranges can be translated into a same public address and different public network port ranges. In this way, it can be ensured that a user can be uniquely determined based on the static mapping algorithm, to implement static source tracing for the user. Because no syslog server needs to be separately deployed, a system structure is effectively simplified, system costs are reduced, and space and power consumption for operating an equipment room can be prevented from being increased.

FIG. 14 is a diagram of an address translation device according to an embodiment of this application. The address translation device may be used in the system shown in FIG. 4. For example, the address translation device may be a broadband remote access server, and may implement the steps performed by the broadband remote access server in the foregoing method embodiments. As shown in FIG. 14, the address translation device includes the following modules.

A translation module 701 is configured to translate a source address of a first packet from a first private address into a target address based on the received first packet of a first user being a packet of a target application. For implementation of a function of the translation module 701, refer to the related descriptions of step 101 in the foregoing method embodiments.

A sending module 702, configured to send the first packet to a first forwarding device.

The sending module 702 is further configured to report traceability information of the first user to an authentication server, where the traceability information includes the target address corresponding to the first private address, and a first public address and a first port range that are corresponding to the first private address. The target address is different from the first public address. For implementation of a function of the sending module 702, refer to the related descriptions of step 102 in the foregoing method embodiments.

Optionally, the first private address belongs to a first private address pool. The translation module 701 is configured to translate a source address of the first packet from the first private address into the target address in a second private address pool based on the received first packet of the first user being the packet of the target application. The second private address pool is different from the first private address pool. For implementation of a function of the translation module 701, further refer to the related descriptions of step 202 in the foregoing method embodiments.

Optionally, the first public address belongs to a first public address pool. The translation module 701 is configured to translate a source address of the first packet from the first private address into the target address in a second public address pool based on the received first packet of the first user being the packet of the target application. The second public address pool is different from the first public address pool. For implementation of a function of the translation module 701, further refer to the related descriptions of step 304 in the foregoing method embodiments.

Optionally, the translation module 701 may be further configured to translate a source port of the first packet into a port in a second port range.

Optionally, the sending module 702 is further configured to advertise a route of the second public address pool to a first forwarding device, for the first forwarding device to advertise the route of the second public address pool. For implementation of a function of the sending module 702, further refer to the related descriptions of step 302 and step 303 in the foregoing method embodiments.

Optionally, the sending module 702 may be configured to: report first information to the authentication server, where the first information includes the first public address and the first port range that are corresponding to the first private address; and report second information to the authentication server, where the second information includes the target address corresponding to the first private address.

Optionally, the sending module 702 may be configured to: after the first user goes online, report an accounting-start packet to the authentication server, where the accounting-start packet includes the first information; and report an accounting-update packet to the authentication server based on the received first packet being the packet of the target application, where the accounting-update packet includes the second information. For implementation of a function of the sending module 702, further refer to the related descriptions of steps 201 and 204 and steps 301 and 306 in the foregoing method embodiments.

Optionally, the translation module 701 may be further configured to: based on a received second packet of the first user not being the packet of the target application, translate a source address of the second packet from the first private address into the first public address, and translate a source port of the second packet into a port in the first port range. For implementation of a function of the translation module 701, further refer to the related descriptions of step 206 and step 308 in the foregoing method embodiments.

The sending module 702 may be further configured to send, to a second forwarding device, the NAT-translated second packet. For implementation of a function of the sending module 702, further refer to the related descriptions of step 207 and step 309 in the foregoing method embodiments.

Optionally, the translation module 701 is further configured to: based on a received third packet of a second user not being the packet of the target application, translate a source address of the third packet from a second private address into a second public address, and translate a source port of the third packet into a port in a third port range. The first private address and the second private address belong to a same private address pool, and the first public address and the second public address belong to a same public address pool. For implementation of a function of the translation module 701, further refer to the related descriptions of step 208 and step 310 in the foregoing method embodiments.

The sending module 702 may be further configured to send, to the second forwarding device, the NAT-translated third packet. For implementation of a function of the sending module 702, further refer to the related descriptions of step 209 and step 311 in the foregoing method embodiments.

Optionally, the translation module 701 may be configured to: determine, by using a service awareness SA service board, that the first packet of the first user is the packet of the target application; or determine, based on an ACL, that the first packet of the first user is the packet of the target application.

Optionally, the target application may be an application on which an acceleration service is deployed.

In conclusion, this embodiment of this application provides the address translation device. The device can translate the source address of the first packet from the first private address into the target address based on the first packet of the first user being the packet of the target application, and send the first packet to the first forwarding device. In addition, the traceability information of the first user includes not only the target address corresponding to the first private address but also the first public address and the first port range that are corresponding to the first private address. In the traceability information of the first user, the first private address is corresponding to two different addresses. Therefore, when network address translation is performed on a packet of the first user, a source address of the packet can be translated from the first private address into different network addresses based on a type of an application to which the packet belongs, to effectively improve flexibility of address translation.

In a scenario in which the target address is a private address, the target address may represent only the first user. Therefore, it can be ensured that the first forwarding device can perform network address translation on the first packet in a static mapping manner. In addition, when source tracing is performed on the first user, source tracing may be performed based on the traceability information stored in the authentication server and a static mapping algorithm in the first forwarding device. In a scenario in which the target address is a public address, because the address translation device has translated the source address of the first packet into a public address in an independent public address pool, the first forwarding device does not need to perform network address translation on the first packet. In addition, when source tracing is performed on the first user, source tracing may be directly performed based on the traceability information stored in the authentication server. No syslog server needs to be deployed in the foregoing two scenarios, to effectively simplify a system structure and reduce system costs, and prevent space and power consumption for operating an equipment room from being increased.

FIG. 15 is a diagram of a structure of another address translation device according to an embodiment of this application. The address translation device may be used in the system shown in FIG. 4. The address translation device may be an authentication server, and may implement the steps performed by the authentication server in the foregoing method embodiments. As shown in FIG. 15, the address translation device includes the following module.

A receiving module 801 is configured to receive traceability information of a first user, where the traceability information includes a target address corresponding to a first private address of the first user, and a first public address and a first port range that are corresponding to the first private address, where the target address is different from the first public address. For implementation of a function of the receiving module 801, refer to the related descriptions of step 102 in the foregoing method embodiments.

Optionally, the receiving module 801 may be configured to: receive first information, where the first information includes the first public address and the first port range that are corresponding to the first private address; and receive second information, where the second information includes the target address corresponding to the first private address.

Optionally, the receiving module 801 may be configured to: receive an accounting-start packet, where the accounting-start packet includes the first information; and receive an accounting-update packet, where the accounting-update packet includes the second information. For implementation of a function of the receiving module 801, further refer to the related descriptions of steps 201 and 204 and steps 301 and 306 in the foregoing method embodiments.

Optionally, the first private address belongs to a first private address pool, the target address belongs to a second private address pool, and the second private address pool is different from the first private address pool. Alternatively, the first public address belongs to a first public address pool, the target address belongs to a second public address pool, and the second public address pool is different from the first public address pool.

In conclusion, this embodiment of this application provides the address translation device. The traceability information, of the first user, that is received by the device includes not only the target address corresponding to the first private address, but also the first public address and the first port range that are corresponding to the first private address. In the traceability information of the first user, the first private address is corresponding to two different addresses. Therefore, when network address translation is performed on a packet of the first user, a source address of the packet can be translated from the first private address into different network addresses, to effectively improve flexibility of address translation.

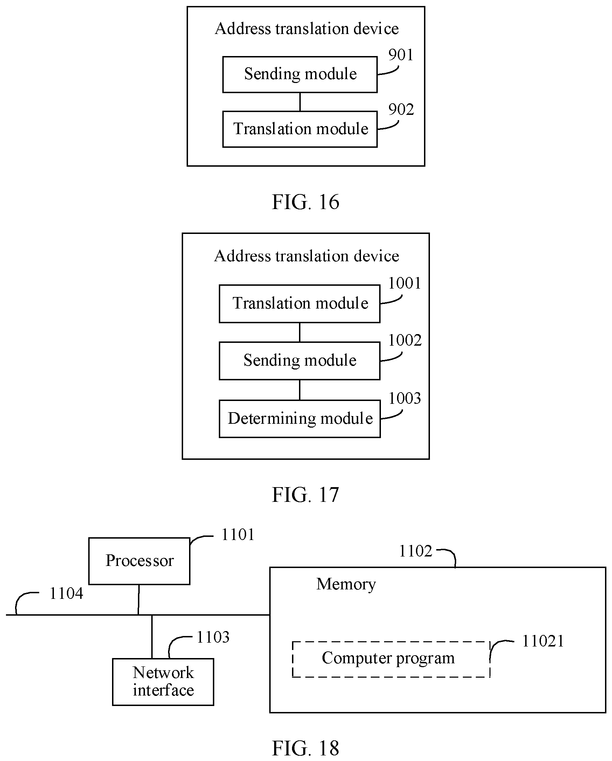

FIG. 16 is a diagram of a structure of still another address translation device according to an embodiment of this application. The address translation device may be used in the system shown in FIG. 4, and the address translation device may be a broadband remote access server. As shown in FIG. 16, the address translation device includes the following modules.

A sending module 901 is configured to send a first packet to a first forwarding device based on the first packet sent by a first user being a packet of a target application, for the first forwarding device to perform network address translation on the first packet, where a source address of the first packet is a first private address. For implementation of a function of the sending module 901, refer to the related descriptions of step 401 and step 503 in the foregoing method embodiments.

A translation module 902 is configured to perform network address translation on a second packet based on the second packet sent by the first user not being the packet of the target application, where a source address of the NAT-translated second packet is different from the first private address. For implementation of a function of the translation module 902, refer to the related descriptions of step 402 and step 505 in the foregoing method embodiments.

The sending module 901 is further configured to send, to a second forwarding device, the NAT-translated second packet. For implementation of a function of the sending module 901, further refer to the related descriptions of step 506 in the foregoing method embodiments.

Optionally, still refer to FIG. 16. The address translation device further includes an allocation module 903. The allocation module 903 is configured to: after the first user goes online, allocate the first private address to the first user from a first private address pool; and after a second user goes online, allocate a second private address to the second user from a second private address pool.

The first user is a user who applies for an acceleration service of the target application, the second user is a user who does not apply for the acceleration service of the target application, and the first private address pool is different from the second private address pool. For implementation of a function of the allocation module 903, refer to the related descriptions of step 501 and step 502 in the foregoing method embodiments.

Optionally, the translation module 902 is further configured to perform network address translation on a third packet sent by the second user. For implementation of a function of the translation module 902, further refer to the related descriptions of step 507 in the foregoing method embodiments.

The sending module 901 is further configured to send, to the second forwarding device, the NAT-translated third packet. For implementation of a function of the sending module 901, further refer to the related descriptions of step 508 in the foregoing method embodiments.

In conclusion, this embodiment of this application provides the address translation device. The device can directly send the first packet of the target application to the first forwarding device, that is, does not perform network address translation on the first packet of the target application. In addition, the device can perform network address translation on the second packet that is not of the target application, and send the second packet to the second forwarding device. Because network address translation is not performed on the first packet of the target application, the source address of the packet may represent only the first user. Therefore, it can be ensured that the first forwarding device can perform network address translation on the first packet in a static mapping manner. Correspondingly, when source tracing is performed on the first user, source tracing may be directly performed by using a static mapping algorithm in the first forwarding device, and no syslog server needs to be separately deployed. Therefore, a system structure is effectively simplified, system costs are reduced, and space and power consumption for operating an equipment room can be prevented from being increased.

FIG. 17 is a diagram of a structure of yet another address translation device according to an embodiment of this application. The address translation device may be used in the system shown in FIG. 4, and the address translation device may be a first forwarding device. As shown in FIG. 17, the address translation device includes the following modules.

A translation module 1001 is configured to: perform first static mapping translation on a first packet, of a first user, that is sent by a broadband remote access server, and perform second static mapping translation on a second packet, of a second user, that is sent by the broadband remote access server. For implementation of a function of the translation module 1001, refer to the related descriptions of step 601 and step 602 in the foregoing method embodiments.

A sending module 1002 is configured to forward the first packet and the second packet after static mapping translation.

The first static mapping translation includes: translating a source address of the first packet from a first internal network address into a first public address, and translating a source port of the first packet from a first internal network port into a first public network port in a first public network port range.

The second static mapping translation includes: translating a source address of the second packet from the first internal network address into the first public address, and translating a source port of the second packet from a second internal network port into a second public network port in a second public network port range.

The first internal network port belongs to a first internal network port range, and the second internal network port belongs to a second internal network port range.

Optionally, still refer to FIG. 17. The address translation device may further include the following module.

A determining module 1003 is configured to: determine, based on received traceability instructions for the first public address and the first public network port range by using a static mapping algorithm, the first internal network address and the first internal network port range that are corresponding to the first public address and the first public network port range; and determine, based on received traceability instructions for the first public address and the second public network port range by using the static mapping algorithm, the first internal network address and the second internal network port range that are corresponding to the first public address and the second public network port range. For implementation of a function of the determining module 1003, refer to the related descriptions of step 603 and step 604 in the foregoing method embodiments.

In conclusion, this embodiment of this application provides the address translation device, so that the device can perform network address translation on a received packet based on the static mapping algorithm. Due to the static mapping algorithm, network address translation can be performed based on an internal network address and an internal network port range. To be specific, for a same internal network address, if internal network port ranges are different, the internal network address and the internal network port ranges can be translated into a same public address and different public network port ranges. In this way, it can be ensured that a user can be uniquely determined based on the static mapping algorithm, to implement static source tracing for the user. Because no syslog server needs to be separately deployed, a system structure is effectively simplified, system costs are reduced, and space and power consumption for operating an equipment room can be prevented from being increased.

It may be clearly understood by persons skilled in the art that for the purpose of convenient and brief description, for detailed working processes of the foregoing address translation devices and modules, refer to the corresponding processes in the foregoing method embodiments. Details are not described herein again.

It should be understood that the address translation device provided in embodiments of this application may be implemented by using an application-specific integrated circuit (application-specific integrated circuit, ASIC) or a programmable logic device (programmable logic device, PLD). The PLD may be a complex programmable logic device (complex programmable logical device, CPLD), a field programmable gate array (field programmable gate array, FPGA), generic array logic (generic array logic, GAL), or any combination thereof. In addition, the address translation method provided in the foregoing method embodiments may also be implemented by using software. When the address translation method provided in the foregoing method embodiments is implemented by using the software, the address translation device may include a software module configured to implement the foregoing method.

FIG. 18 is a diagram of a structure of still yet another address translation device according to an embodiment of this application. The address translation device may be used in the system shown in FIG. 4, and may be the broadband remote access server, the authentication server, or the first forwarding device in the system. Refer to FIG. 18. The address translation device includes a processor 1101, a memory 1102, a network interface 1103, and a bus 1104.

The memory 1102 stores a computer program 11021, and the computer program 11021 is used to implement various application functions. The processor 1101 is configured to execute the computer program 11021 to implement the address translation method provided in the foregoing method embodiments. For example, the processor 1101 is configured to execute the computer program 11021 to implement functions of the modules in the address translation device shown in any one of FIG. 14 to FIG. 17.

The processor 1101 may be a central processing unit (central processing unit, CPU), or the processor 1101 may be another general-purpose processor, a digital signal processor (digital signal processor, DSP), an ASIC, an FPGA, a graphics processing unit (graphics processing unit, GPU), another programmable logic device, a discrete gate, a transistor logic device, a discrete hardware component, or the like. The general-purpose processor may be a microprocessor or any conventional processor.

The memory 1102 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitative description, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data date SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

There may be multiple network interfaces 1103, and the network interface 1103 is configured to implement a communication connection (which may be wired or wireless) to another device. In this embodiment of this application, the network interface 1103 is configured to send/receive a packet. The another device may be a device such as a terminal, a server, or a VM, or another network device.

The bus 1104 is configured to connect the processor 1101, the memory 1102, and the network interface 1103. Moreover, in addition to a data bus, the bus 1104 may further include a power bus, a control bus, a status signal bus, and the like. However, for clear description, various types of buses in the figure are marked as the bus 1104.

If the address translation device is the broadband remote access server, for a detailed processing process of the processor 1101, refer to the steps performed by the broadband remote access server in the foregoing method embodiments; if the address translation device is the authentication server, for a detailed processing process of the processor 1101, refer to the steps performed by the authentication server in the foregoing method embodiments; or if the address translation device is the first forwarding device, for a detailed processing process of the processor 1101, refer to the steps performed by the first forwarding device in the foregoing method embodiments. Details are not described herein again.

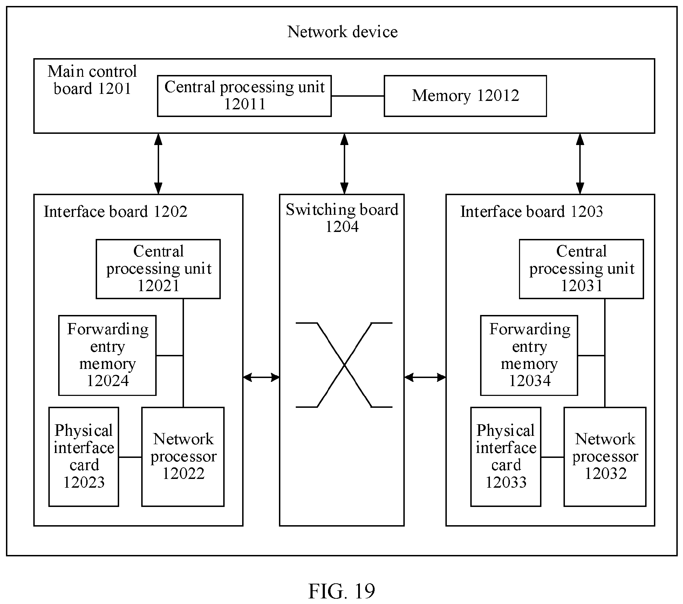

FIG. 19 is a diagram of a structure of a further address translation device according to an embodiment of this application. The address translation device may be used in the system shown in FIG. 4, and may be the broadband remote access server, the authentication server, or the first forwarding device in the system. As shown in FIG. 19, the address translation device may include a main control board 1201 and at least one interface board (the interface board is also referred to as a line card or a service board). For example, FIG. 19 shows an interface board 1202 and an interface board 1203. In a case of multiple interface boards, the address translation device may further include a switching board 1204, where the switching board 1204 is configured to complete data exchange between the interface boards.

The main control board 1201 is also referred to as a main processing unit (main processing unit, MPU) or a route processor card (route processor card). The main control board 1201 is configured to complete functions such as system management, device maintenance, and protocol processing. The main control board 1201 mainly includes three types of functional units: a system management and control unit, a system clock unit, and a system maintenance unit. The main control board 1201 includes a central processing unit 12011 and a memory 12012.

The interface boards 1202 and 1203 are also referred to as line processing units (line processing units, LPUs), line cards (line cards), or service boards. The interface board is configured to provide various service interfaces and implement packet forwarding. The service interfaces provided by the interface board may include a data packet over SONET/SDH (packet over SONET/SDH, POS) interface, a gigabit Ethernet (gigabit Ethernet, GE) interface, an asynchronous transfer mode (asynchronous transfer mode, ATM) interface, and the like. SONET means a synchronous optical network (synchronous optical network), and SDH means a synchronous digital hierarchy (synchronous digital hierarchy). The main control board 1201, the interface board 1202, and the interface board 1203 are connected to a system backplane through a system bus to implement interworking. As shown in FIG. 19, the interface board 1202 includes one or more central processing units 12021. The central processing unit 12021 is configured to: control and manage the interface board 1202, and communicate with the central processing unit 12011 on the main control board 1201. The memory 12024 on the interface board 1202 is configured to store a forwarding entry, and a network processor 12022 may forward a packet by searching for the forwarding entry stored in the memory 12024. The memory 12024 may be further configured to store program code.

The interface board 1202 further includes one or more physical interface cards 12023. The one or more physical interface cards 12023 are configured to: receive a packet sent by a previous-hop node, and send a processed packet to a next-hop node based on an indication of the central processing unit 12021.

In addition, it may be understood that the central processing unit 12021 and/or the network processor 12022 in the interface board 1202 in FIG. 19 may be dedicated hardware or a chip, for example, an ASIC may be used to implement the foregoing functions, and this implementation is generally referred to as a manner in which a forwarding plane uses dedicated hardware or a chip for processing. In another implementation, the central processing unit 12021 and/or the network processor 12022 may also use a general-purpose processor, for example, a general-purpose CPU, to implement the functions described above.

In addition, it should be understood that there may be one or more main control boards 1201, and when there are multiple main control boards 1201, a master main control board and a secondary main control board may be included. There may be one or more interface boards. The address translation device with a stronger data processing capability provides more interface boards. As shown in FIG. 19, the address translation device includes the interface board 1202 and the interface board 1203. When a distributed forwarding mechanism is used, a structure of the interface board 1203 is basically the same as a structure of the interface board 1202, and operations on the interface board 1203 are basically similar to operations on the interface board 1202. For brevity, details are not described. When the address translation device has multiple interface boards, the multiple interface boards may communicate with each other via one or more switching network boards 1204, and may implement load sharing and redundancy backup, to provide a large-capacity data switching and processing capability.

In a centralized forwarding architecture, the address translation device may not need the switching board 1204, and the interface board provides a function of processing service data of an entire system. Therefore, a data access and processing capability of an address translation device in a distributed architecture is higher than that of an address translation device in a centralized architecture. A specific architecture that is to be used depends on a specific networking deployment scenario. This is not limited herein.

In this embodiment of this application, the memory 12012 and the memory 12024 each may be a ROM or another type of static storage device that can store static information and instructions, may be a RAM or another type of dynamic storage device that can store information and instructions, or may be an EEPROM, a compact disc read-only memory (compact disc read-only Memory, CD-ROM) or another optical disc storage, an optical disc storage (including a compact disc, a laser disc, an optical disc, a digital versatile disc, a Blu-ray disc, or the like), a magnetic disk or another magnetic storage device, or any other medium that can be configured to carry or store expected program code in a form of instructions or a data structure and that can be accessed by a computer, but are not limited thereto. The memory 12024 in the interface board 1202 may exist independently, and is connected to the central processing unit 12021 through a communication bus; or the memory 12024 may be integrated with the central processing unit 12021. The memory 12012 in the main control board 1201 may exist independently, and is connected to the central processing unit 12011 through a communication bus; or the memory 12012 may be integrated with the central processing unit 12011.

The program code stored in the memory 12024 is controlled and executed by the central processing unit 12021, and the program code stored in the memory 12012 is controlled and executed by the central processing unit 12011. The central processing unit 12021 and/or the central processing unit 12011 may implement, by executing the program code, the address translation method provided in the foregoing method embodiments. The program code stored in the memory 12024 and/or the memory 12012 may include one or more software units, and the one or more software units may be functional modules shown in any one of FIG. 14 to FIG. 17.

In this embodiment of this application, the physical interface card 12023 may be an apparatus using any transceiver, and is configured to communicate with another device or a communication network, for example, the Ethernet, a radio access network (radio access network, RAN), or a wireless local area network (wireless local area network, WLAN).

Optionally, the address translation devices shown in FIG. 14 to FIG. 18 may also be implemented by using the structure shown in FIG. 19.

An embodiment of this application further provides a computer-readable storage medium. The computer-readable storage medium stores instructions. When the instructions are run on a processor, the processor is caused to perform the steps performed by the broadband remote access server, the authentication server, or the first forwarding device in the foregoing method embodiments.

An embodiment of this application further provides a computer program product including instructions. When the instructions are run on a processor, the processor is caused to perform the steps performed by the broadband remote access server, the authentication server, or the first forwarding device in the foregoing method embodiments.

In embodiments of this application, the terms "first", "second", and "third" are merely used for description, but cannot be understood as an indication or implication of relative importance. In embodiments of this application, the term "at least one" indicates one or more, and "multiple" indicates two or more. The term "and/or" in embodiments of this application describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

Finally, it should be noted that the foregoing embodiments are merely used to describe the technical solutions in embodiments of this application, but not limit the technical solutions. Although embodiments of this application are described in detail with reference to the foregoing embodiments, persons of ordinary skill in the art should understand that they may still modify the technical solutions described in the foregoing embodiments, or perform equivalent replacement on some technical features thereof. However, these modifications or replacements do not make the essence of the corresponding technical solutions depart from the protection scope of the technical solutions in embodiments of this application.

## Claims

1. An address translation method, wherein the method comprises:
translating a source address of a first packet from a first private address to a target address based on the received first packet of a first user being a packet of a target application, and sending the first packet to a first forwarding device; and
reporting traceability information of the first user to an authentication server, wherein the traceability information comprises the target address corresponding to the first private address, and a first public address and a first port range that are corresponding to the first private address, wherein
the target address is different from the first public address.

2. The method according to claim 1, wherein the first private address belongs to a first private address pool, and the translating the source address of the first packet from the first private address to the target address based on the received first packet of the first user being the packet of the target application comprises:
translating the source address of the first packet from the first private address into the target address in a second private address pool based on the received first packet of the first user being the packet of the target application, wherein
the second private address pool is different from the first private address pool.

3. The method according to claim 1, wherein the first public address belongs to a first public address pool, and the translating the source address of the first packet from the first private address to the target address based on the received first packet of the first user being the packet of the target application comprises:
translating the source address of the first packet from the first private address into the target address in a second public address pool based on the received first packet of the first user being the packet of the target application, wherein
the second public address pool is different from the first public address pool.

4. The method according to claim 3, wherein the method further comprises:
translating a source port of the first packet into a port in a second port range.

5. The method according to claim 3 or 4, wherein the method further comprises:
advertising a route of the second public address pool to the first forwarding device, for the first forwarding device to advertise the route of the second public address pool.

6. The method according to any one of claims 1 to 5, wherein the reporting the traceability information of the first user to the authentication server comprises:
reporting first information to the authentication server, wherein the first information comprises the first public address and the first port range that are corresponding to the first private address; and
reporting second information to the authentication server, wherein the second information comprises the target address corresponding to the first private address.

7. The method according to claim 6, wherein the reporting the first information to the authentication server comprises:
after the first user goes online, reporting an accounting-start packet to the authentication server, wherein the accounting-start packet comprises the first information; and
the reporting the second information to the authentication server comprises:
reporting an accounting-update packet to the authentication server based on the received first packet being the packet of the target application, wherein the accounting-update packet comprises the second information.

8. The method according to any one of claims 1 to 7, wherein the method further comprises:
based on a received second packet of the first user not being the packet of the target application, translating a source address of the second packet from the first private address into the first public address, translating a source port of the second packet into a port in the first port range, and sending the second packet to a second forwarding device.

9. The method according to any one of claims 1 to 8, wherein the method further comprises:
based on a received third packet of a second user not being the packet of the target application, translating a source address of the third packet from a second private address into a second public address, translating a source port of the third packet into a port in a third port range, and sending the third packet to the second forwarding device, wherein
the first private address and the second private address belong to a same private address pool, and the first public address and the second public address belong to a same public address pool.

10. The method according to any one of claims 1 to 9, wherein the method further comprises:
determining, by using a service awareness SA service board, that the first packet of the first user is the packet of the target application; or
determining, by using an access control list ACL, that the first packet of the first user is the packet of the target application.

11. The method according to any one of claims 1 to 10, wherein the method is applied to a broadband remote access server.

12. The method according to any one of claims 1 to 11, wherein the target application is an application on which an acceleration service is deployed.

13. An address translation method, applied to an authentication server, wherein the method comprises:
receiving traceability information of a first user, wherein the traceability information comprises a target address corresponding to a first private address of the first user, and a first public address and a first port range that are corresponding to the first private address; and
the target address is different from the first public address.

14. The method according to claim 13, wherein the receiving the traceability information of the first user comprises:
receiving first information, wherein the first information comprises the first public address and the first port range that are corresponding to the first private address; and
receiving second information, wherein the second information comprises the target address corresponding to the first private address.

15. The method according to claim 14, wherein the receiving the first information comprises: receiving an accounting-start packet, wherein the accounting-start packet comprises the first information; and
the receiving the second information comprises: receiving an accounting-update packet, wherein the accounting-update packet comprises the second information.

16. The method according to any one of claims 13 to 15, wherein the first private address belongs to a first private address pool, the target address belongs to a second private address pool, and the second private address pool is different from the first private address pool; or
the first public address belongs to a first public address pool, the target address belongs to a second public address pool, and the second public address pool is different from the first public address pool.

17. An address translation method, applied to an address translation system, wherein the system comprises a broadband remote access server and a first forwarding device, and the method comprises:
translating, by the broadband remote access server, a source address of a first packet from a first private address to a target address based on the received first packet of a first user being a packet of a target application, and sending the first packet to the first forwarding device;
forwarding, by the first forwarding device, the first packet; and
reporting, by the broadband remote access server, traceability information of the first user to an authentication server, wherein the traceability information comprises the target address corresponding to the first private address, and a first public address and a first port range that are corresponding to the first private address, wherein
the target address is different from the first public address.

18. The method according to claim 17, wherein the first public address belongs to a first public address pool; and the translating, by the broadband remote access server, the source address of the first packet from the first private address to the target address based on the received first packet of the first user being the packet of the target application comprises:
translating, by the broadband remote access server, the source address of the first packet from the first private address into the target address in a second public address pool based on the received first packet of the first user being the packet of the target application, wherein the second public address pool is different from the first public address pool; and
the method further comprises:
advertising, by the broadband remote access server, a route of the second public address pool to the first forwarding device; and
advertising, by the first forwarding device, the route of the second public address pool, wherein
the source address of the first packet forwarded by the first forwarding device is the target address.

19. The method according to claim 17, wherein the first private address belongs to a first private address pool; and the translating, by the broadband remote access server, the source address of the first packet from the first private address to the target address based on the received first packet of the first user being the packet of the target application comprises:
translating, by the broadband remote access server, the source address of the first packet from the first private address into the target address in a second private address pool based on the received first packet of the first user being the packet of the target application, wherein the second private address pool is different from the first private address pool; and
the forwarding, by the first forwarding device, the first packet comprises:
translating, by the first forwarding device, the target address of the first packet into a public address in a third public address pool, translating a source port of the first packet into a port in a fourth port range, and forwarding the first packet.

20. The method according to any one of claims 17 to 19, wherein the method further comprises:
based on a received second packet of the first user not being the packet of the target application, translating, by the broadband remote access server, a source address of the second packet from the first private address into the first public address, translating a source port of the second packet into a port in the first port range, and sending the second packet to a second forwarding device;
based on a received third packet of a second user not being the packet of the target application, translating, by the broadband remote access server, a source address of the third packet from a second private address into a second public address, translating a source port of the third packet into a port in a third port range, and sending the third packet to the second forwarding device; and
forwarding, by the second forwarding device, the second packet and the third packet, wherein
the first private address and the second private address belong to a same private address pool, and the first public address and the second public address belong to a same public address pool.

21. The method according to any one of claims 17 to 20, wherein the first forwarding device is an acceleration router, configured to accelerate forwarding of the packet of the target application.

22. An address translation method, wherein the method comprises:
sending a first packet to a first forwarding device based on the first packet sent by a first user being a packet of a target application, for the first forwarding device to perform network address translation on the first packet, wherein a source address of the first packet is a first private address; and
performing network address translation on a second packet based on the second packet sent by the first user not being the packet of the target application, and sending the second packet to a second forwarding device, wherein a source address of the NAT-translated second packet is different from the first private address.

23. The method according to claim 22, wherein the method further comprises:
after the first user goes online, allocating the first private address to the first user from a first private address pool; and
after a second user goes online, allocating a second private address to the second user from a second private address pool, wherein
the first user is a user who applies for an acceleration service of the target application, the second user is a user who does not apply for the acceleration service of the target application, and the first private address pool is different from the second private address pool.

24. The method according to claim 23, wherein the method further comprises:
performing network address translation on a third packet sent by the second user, and sending the third packet to the second forwarding device.

25. An address translation device, wherein the address translation device comprises a memory, a processor, and a computer program that is stored in the memory and is capable of being run on the processor, and when executing the computer program, the processor implements the method according to any one of claims 1 to 16 or the method according to any one of claims 22 to 24.

26. A computer-readable storage medium, wherein the computer-readable storage medium stores instructions, and when the instructions are run on a processor, the processor performs the method according to any one of claims 1 to 16 or the method according to any one of claims 22 to 24.

27. A computer program product comprising instructions, wherein the instructions are executed by a processor to implement the method according to any one of claims 1 to 16 or the method according to any one of claims 22 to 24.

28. A chip, wherein the chip is configured to implement the method according to any one of claims 1 to 16 or the method according to any one of claims 22 to 24.

29. An address translation system, wherein the system comprises a broadband remote access server and a forwarding device, wherein
the broadband remote access server is configured to implement the method according to any one of claims 1 to 12 or the method according to any one of claims 22 to 24.
